(19) Europäisches Patentamt / European Patent Office / Office européen des brevets

(11) **EP 2 087 675 B1**

(12) **FASCICULE DE BREVET EUROPEEN**

(45) Date de publication et mention
de la délivrance du brevet:
**25.09.2013 Bulletin 2013/39**

(21) Numéro de dépôt: **07858716.9**

(22) Date de dépôt: **19.11.2007**

(51) Int Cl.:
*H04L 25/02* (2006.01)     *H04L 27/26* (2006.01)
*H04B 7/06* (2006.01)     *H04B 7/04* (2006.01)

(86) Numéro de dépôt international:
**PCT/FR2007/052363**

(87) Numéro de publication internationale:
**WO 2008/062131 (29.05.2008 Gazette 2008/22)**

(54) **PROCEDES ET MODULES D'EMISSION/RECEPTION POUR UN SYSTEME MULTI-ANTENNES MULTI-PORTEUSES A SEQUENCE D'APPRENTISSAGE**

ÜBERTRAGUNG-/EMPFANGSVERFAHREN UND MODULE FÜR EIN MULTITRÄGER- UND MULTIANTENNENSYSTEM MIT TRAININGSSEQUENZ

TRANSMISSION/RECEPTION METHODS AND MODULES FOR A MULTIPLE-CARRIER MULTIPLE-ANTENNA SYSTEM WITH TRAINING SEQUENCE

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **24.11.2006 FR 0655106**

(43) Date de publication de la demande:
**12.08.2009 Bulletin 2009/33**

(73) Titulaire: **Orange**
**75015 Paris (FR)**

(72) Inventeurs:
• **LE SAUX, Benoit**
**35512 Cesson Sevigne (FR)**
• **HELARD, Maryline**
**35700 Rennes (FR)**
• **BOHER, Laurent**
**35000 Rennes (FR)**

(74) Mandataire: **Jeune, Pascale et al**
**R&D/PIV/Brevets**
**38/40 Rue du General Leclerc**
**92794 Issy Moulineaux Cedex 9 (FR)**

(56) Documents cités:
• BARHUMI I ET AL: "Optimal training design for MIMO OFDM systems in mobile wireless channels" IEEE TRANSACTIONS ON SIGNAL PROCESSING, IEEE SERVICE CENTER, NEW YORK, NY, US, vol. 51, no. 6, juin 2003 (2003-06), pages 1615-1624, XP011096658 ISSN: 1053-587X cité dans la demande
• YE (GEOFFREY) LI: "Simplified Channel Estimation for OFDM Systems With Multiple Transmit Antennas" IEEE TRANSACTIONS ON WIRELESS COMMUNICATIONS, IEEE SERVICE CENTER, PISCATAWAY, NJ, US, vol. 1, no. 1, janvier 2002 (2002-01), pages 67-75, XP011064372 ISSN: 1536-1276

**Description**

La présente invention se rapporte au domaine des télécommunications. Au sein de ce domaine, l'invention se rapporte plus particulièrement aux communications dites numériques. Les communications numériques comprennent en particulier les communications sans fil par voie hertzienne ainsi que les communications filaires. Le support de transmission des communications est couramment appelé canal de transmission ou de propagation, à l'origine en référence à un canal aérien et par extension en référence à tout canal.

L'invention concerne les techniques mises en oeuvre en émission et en réception spécialement adaptées pour l'estimation des canaux de transmission dans un système multi-antennes de type MIMO ("Multiple Input Multiple Output " pour "Entrées Multiples Sorties Multiples") ou MISO ("Multiple Input Single Output" pour "Entrées Multiples Sortie Unique") mettant en oeuvre des porteuses multiples et une égalisation, que cette dernière soit dans le domaine fréquentiel ou dans le domaine temporel. Dans un système à plusieurs antennes d'émission ou de réception, il y a autant de canaux de transmission que de paires (antenne d'émission- antenne de réception) ; ces canaux sont parfois appelés sous-canaux. L'estimation consiste à estimer la réponse impulsionnelle de chacun de ces canaux. L'invention s'applique aux systèmes multi-antennes multi porteuses mettant en oeuvre typiquement au moins deux antennes d'émission. Toutefois l'invention s'applique tout aussi bien à un système à une seule antenne d'émission.

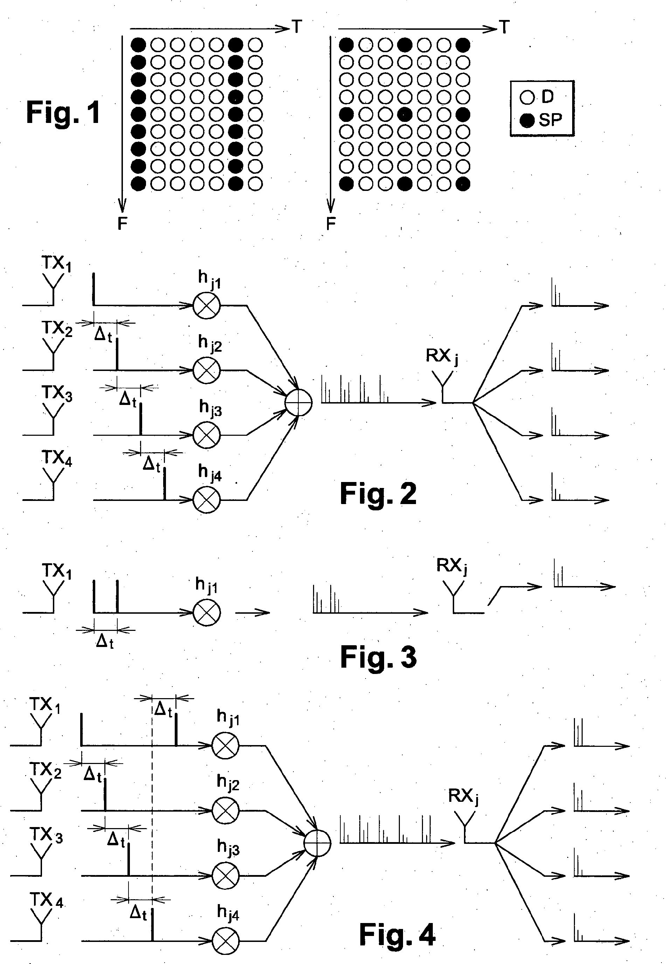

Ces systèmes mettent en oeuvreune trame dont le contenu, en entrée du dispositif d'émission, est constitué de symboles de données utiles c'est-à-dire de symboles qui codent l'information d'un signal d'entrée et, en sortie du même dispositif, est réparti en temps et en fréquence lors de l'émission sur plusieurs porteuses. La figure 1. est une illustration d'une trame de type OFDM ("Orthogonal Frequency Division Multiplexing") avec des symboles de données utiles D en blanc et des symboles pilotes SP en noir. On parle alors d'une trame temps-fréquence qui détermine dans le temps l'emplacement des symboles de données utiles et de symboles pilotes sur les différentes porteuses. En outre, la présence de plusieurs antennes d'émission permet d'introduire de la diversité spatiale en multiplexant les données utiles entre ces antennes. Dans la suite du document, les données désignent les données utiles.

L'invention peut s'appliquer aux communications sur voie montante (d'un terminal vers une station de base), ainsi qu'aux communications sur voie descendante (d'une station de base vers un terminal).

Un exemple d'application de l'invention est le domaine des communications fixes ou radio mobiles, notamment pour les systèmes de quatrième génération et suivantes typiquement dits B3G (acronyme de Beyond 3rd Generation). Ces systèmes comprennent en particulier les systèmes MC-CDMA ("Multi-Carrier Coded Division Multiple Access"), OFDMA ("Orthogonal Frequency Division Multiple Access") en voie descendante ou montante avec un schéma de transmission de type MIMO ("Multiple Input Multiple Output"), dans lesquels les données à transmettre sont réparties dans des trames temps-fréquence comportant des symboles pilotes et éventuellement des porteuses nulles. L'invention s'applique en particulier à tout type de système avec modulation OFDM par exemple de type OFDMA, LP-OFDM, ou à des systèmes de type IFDMA.

Les procédés d'émission classiques comprennent une étape de modulation. Dès lors qu'une modulation différentielle (système non-cohérent) n'est pas utilisée, il est impératif pour le récepteur d'estimer le canal de propagation (système cohérent), afin de pouvoir égaliser le signal reçu et détecter les bits émis. Les modulations différentielles appliquées aux systèmes multi antennes ne sont pas considérées actuellement comme des candidates prometteuses pour des systèmes de communication à haut débit. En effet, elles doublent le niveau de bruit ce qui a pour résultat une dégradation de la performance de l'ordre de 3dB.

La fonction d'estimation de canal est donc particulièrement importante pour les systèmes multi antennes car les performances de ces systèmes sont directement liées à l'estimation de canal au niveau du récepteur. Dans les systèmes multi antennes, cette fonction doit permettre d'estimer les différents canaux reliant chaque antenne d'émission à chaque antenne de réception indépendamment les uns des autres.

On connaît déjà plusieurs techniques en émission adaptées pour l'estimation des canaux de transmission dans un système multi-antennes comprenant plusieurs antennes d'émission. Parmi ces techniques, on distingue celles qui reposent sur l'exploitation de symboles de référence, dits pilotes, insérés dans la trame temps fréquence lors de l'émission. Ces pilotes sont connus du récepteur et permettent à ce dernier d'estimer les canaux de transmission correspondant à chacune des antennes d'émission. Théoriquement, la capacité des systèmes MIMO augmente linéairement avec le plus petit nombre d'antennes entre les antennes en émission et les antennes en réception. Dans la pratique, l'efficacité spectrale utile est d'autant plus réduite que ce nombre d'antennes augmente à cause de la présence nécessaire de symboles pilotes dans la trame.

Différentes techniques existent pour insérer des symboles pilotes dans la trame temps fréquence émise par une antenne. Pour une même trame temps fréquence, l'ensemble des symboles pilotes forme une séquence d'apprentissage. Pour un système multi antennes, il y a autant de séquences d'apprentissage que d'antennes d'émission.

Une technique connue d'insertion de symboles pilotes illustrée par la figure 2 consiste à émettre sur chaque antenne d'émission une impulsion, ou plus généralement une séquence d'apprentissage, décalée dans le temps entre antennes d'une valeur Δt, de sorte que le récepteur au niveau de chaque antenne de réception puisse isoler dans le domaine temporel les réponses impulsionnelles des différents canaux de transmission. Par exemple, soit $\overline{c}(p)$, $p = 0,...,$ $N$p-1 le symbole pilote émis sur la fréquence porteuse d'indice p sur l'antenne d'émission TX$_1$. Np est le nombre de porteuses pilotes. Le symbole pilote émis sur le même symbole OFDM sur l'antenne TX$_i$ est alors égal à :

$$\tilde{c}(p)_i = \tilde{c}(p)\, e^{-j2\pi \frac{p(i-1)\Delta t}{N p}}$$

avec $\Delta$t le décalage temporel entre les impulsions émises sur les différentes antennes. Afin que les réponses impulsionnelles des différents sous-canaux n'interfèrent pas entre elles, il est nécessaire que $L \leq \Delta t$ avec $L$ l'étalement maximal des retards des différents sous-canaux. D'autre part, une condition pour déterminer l'ensemble des réponses impulsionnelles est $Nt \times L \leq Np$, avec Nt le nombre d'antennes d'émission TX$_i$. Pour assurer cette dernière condition, le décalage temporel $\Delta$t est choisi tel que la relation $Nt \times \Delta t \leq Np$ soit satisfaite.

L'article de M.-S.Baek, H.-J. Kook, M.-J. Kim, Y.-H. You, et H-S. Song, "Multi-Antenna Scheme for High Capacity Transmission in the Digital Audio Broadcasting," IEEE Transactions on Broadcasting, Vol. 51, No. 4, Dec. 2005 et l'article de I. Barhumi, G. Leus, et M. Moonen, "Optimal Training Design for MIMO OFDM Systems in Mobile Wireless Channels," IEEE Transactions on Signal Processing, Vol. 51, No. 6, June 2003 reposent sur une telle technique. Dans le premier article, l'ensemble des sous-porteuses d'un symbole OFDM est dédié à l'estimation de canal, ce qui permet au récepteur de récupérer avant la démodulation OFDM les différentes réponses impulsionnelles. Par contre, dans le second article, le multiplexage des symboles de données utiles et des symboles pilotes, ces derniers répartis sur un ou plusieurs symboles OFDM pour former une séquence d'apprentissage, implique que l'opération de récupération des réponses impulsionnelles en réception se fasse après la démodulation OFDM. Cette opération met en oeuvreune matrice A construite à partir de la séquence d'apprentissage et de la matrice de Fourier de dimension adaptée. L'estimation des coefficients des différentes réponses impulsionnelles consiste à multiplier le signal reçu démodulé par la pseudo inverse de cette matrice A. Les procédés divulgués présentent l'avantage de conserver entre les différentes antennes d'émission la disposition des symboles pilotes d'une trame mono antenne, d'utiliser le même ensemble de sous-porteuses pour l'ensemble des fréquences pilotes, et d'éviter la présence imposée de symboles pilotes nuls. Ils offrent donc une grande efficacité spectrale. Ils permettent avantageusement d'estimer le canal pour l'ensemble des porteuses modulées.

L'invention a pour objectif d'être encore plus efficace que les méthodes connues d'émission de trames temps fréquence avec insertion de symboles pilotes formant une séquence d'apprentissage, lors de leur utilisation dans un système à au moins une antenne, pour améliorer les performances obtenues.

A cette fin, la présente invention a pour objet un procédé d'émission, un module d'émission, un procédé d'estimation de canal, un module d'estimation de canal.

Un procédé d'émission selon l'invention est adapté pour un système à Nt antennes d'émission TX$_1$, ..., TX$_{Nt}$ et Nr antennes de réception, où Nt et Nr sont supérieurs ou égaux à 1, une antenne d'émission étant séparée d'une antenne de réception par un sous canal de transmission, et est mis en oeuvrepar Nt dispositifs d'émission multi porteuses comprenant chacun un module de multiplexage et de modulation par N$_{FFT}$ fonctions orthogonales formant des symboles orthogonaux destinés à être transmis par les Nt antennes d'émission. Le procédé est remarquable en ce qu'il comprend les étapes qui consistent :

- à déterminer une séquence d'apprentissage de base $\tilde{c}(p)$ déterminée par le positionnement de Np symboles pilotes dans une trame temps fréquence,

- à déterminer $Kn = \left( \sum\limits_{i=1}^{Nt} K_i \right)$ répliques de la séquence d'apprentissage de base $\tilde{c}(p)$ telles qu'au moins une réplique soit décalée temporellement de la séquence de base, avec $K_i \geq 1$ et au moins un $K_i \geq 2$, sous contraintes que l'écart temporel extrême entre répliques soit inférieur au nombre Np de porteuses pilotes et que le décalage temporel minimal entre répliques de deux séquences d'apprentissage soit supérieur ou égal à l'étalement maximal des retards des sous canaux,

- à déterminer par antenne d'émission TX$_i$ une séquence d'apprentissage comme étant la somme des K$_i$ répliques.

Un module d'émission selon l'invention comprend un module de multiplexage et de modulation par N$_{FFT}$ fonctions orthogonales adapté à un système multi- antennes mettant en oeuvre Nt antennes d'émission TX$_1$, ..., TX$_{Nt}$, Nr antennes de réception, où Nt et Nr sont supérieurs ou égaux à 1, et une trame temps fréquence par antenne d'émission comprenant des symboles pilotes et des symboles de données d'un signal utile, les symboles de données et les symboles pilotes étant modulés en fréquence par le module de multiplexage et de modulation pour former des symboles orthogonaux qui sont émis par une antenne d'émission sous la forme d'un signal multi porteuses à $N_{FFT}$ porteuses avec Np porteuses pilotes. Le module est remarquable en ce qu'il comprend en outre:

- un module de détermination d'une séquence d'apprentissage de base déterminée par le positionnement de Np symboles pilotes dans la trame temps fréquence associée à une antenne d'émission déterminée,

-

un module de détermination de Kn, $Kn = \left( \sum_{i=1}^{Nt} K_i \right)$, répliques de la séquence d'apprentissage de base telles qu'au moins une réplique soit décalée temporellement de la séquence de base, avec $K_i \geq 1$ et au moins un $K_i \geq 2$, sous contraintes que l'écart temporel extrême entre répliques soit inférieur au nombre Np de porteuses pilotes et que le décalage temporel minimal entre répliques de deux séquences d'apprentissage soit supérieur ou égal à l'étalement maximal des retards des sous canaux reliant une antenne d'émission à une antenne de réception et

- un module de détermination d'une séquence d'apprentissage par antenne d'émission comme étant la somme de $K_i$ répliques.

Un procédé, selon l'invention, d'estimation des sous canaux de transmission d'un système multi-antennes mettant en oeuvre Nt antennes d'émission, où Nt est supérieur ou égal à 1, au moins une antenne de réception et une trame temps fréquence par antenne d'émission qui comprend Np symboles pilotes formant une séquence d'apprentissage et des symboles de données d'un signal utile, chacune des Nt séquences d'apprentissage étant la somme de $K_i$ répliques décalées temporellement ou pas d'une séquence d'apprentissage de base, telles que les valeurs $K_i$ sont supérieures ou égales à un et au moins une valeur $K_i$ est supérieure ou égale à deux, étant connue du récepteur et permettant à ce dernier d'estimer une réponse impulsionnelle correspondant au canal de transmission séparant une antenne d'émission d'une antenne de réception considérées, les symboles de données et les symboles pilotes étant modulés en fréquence par un module de multiplexage et de modulation par $N_{FFT}$ fonctions orthogonales pour former des symboles orthogonaux qui sont émis par les antennes d'émission sous la forme d'un signal multi porteuses à $N_{FFT}$ porteuses. Le procédé est remarquable en ce qu'il comprend :

- une étape de calcul d'une matrice A construite sous forme de blocs à partir des séquences d'apprentissage et de la matrice de Fourier de dimensions $N_{FFT}$ x $N_{FFT}$, dont le nombre de blocs est égal au produit du nombre de symboles orthogonaux de la séquence d'apprentissage de base par la somme des $K_i$, un bloc étant déterminé par le produit d'une part d'une matrice diagonale formée des symboles pilotes contenus dans un symbole orthogonal de la séquence d'apprentissage associée au bloc et d'autre part de la matrice de Fourier et en ce qu'il comprend :

pour une antenne de réception considérée,

- une étape de calcul de $K_i$ estimées d'au moins une parmi les Nt réponses impulsionnelles dans le domaine temporel en multipliant Np symboles pilotes, extraits d'un signal fréquentiel obtenu après démodulation d'un signal temporel reçu par l'antenne de réception considérée au moyen d'une transformée de Fourier de taille $N_{FFT}$, avec le pseudo inverse de la matrice A et
- une étape de calcul d'une moyenne sur les $K_i$ estimées de la réponse impulsionnelle considérée.

Un module d'estimation, selon l'invention, des canaux de transmission d'un système multi-antennes mettant en oeuvre Nt antennes d'émission, où Nt est supérieur ou égale à 1, au moins une antenne de réception et une trame temps fréquence par antenne d'émission qui comprend des symboles pilotes formant une séquence d'apprentissage et des symboles de données d'un signal utile, les Nt séquences d'apprentissage étant connues du récepteur permettent à ce dernier d'estimer Nt réponses impulsionnelles correspondant aux Nt canaux de transmission séparant respectivement une des antennes d'émission de l'antenne de réception considérée, les symboles de données et les symboles pilotes étant modulés en fréquence par un module de multiplexage et de modulation par $N_{FFT}$ fonctions orthogonales pour former des symboles orthogonaux qui sont émis par les antennes d'émission sous la forme d'un signal multi porteuses à $N_{FFT}$ porteuses avec Np porteuses pilotes. Le module est remarquable en ce qu'il comprend :

- des moyens pour calculer une matrice A construite sous forme de blocs à partir des séquences d'apprentissage et de la matrice de Fourier de dimensions $N_{FFT} \times N_{FFT}$ dont le nombre de blocs est égal au produit du nombre de symboles orthogonaux de la séquence d'apprentissage de base par la somme des $K_i$, un bloc étant déterminé par le produit d'une part d'une matrice diagonale formée des symboles pilotes contenus dans un symbole orthogonal de la séquence d'apprentissage associée au bloc et d'autre part de la matrice de Fourier et en ce qu'il comprend :

pour une antenne de réception considérée,

- des moyens pour calculer $K_i$ estimées d'au moins une parmi les Nt réponses impulsionnelles dans le domaine temporel en multipliant Np symboles pilotes extraits d'un signal fréquentiel obtenu après démodulation d'un signal temporel reçu par l'antenne de réception considérée au moyen d'une transformée de Fourier de taille $N_{FFT}$, avec le pseudo inverse de la matrice A et
- un moyen de calcul de moyenne sur les $K_i$ estimées de la réponse impulsionnelle considérée.

Le procédé d'émission et le procédé d'estimation ainsi que les modules et dispositifs associés conformes à l'invention résolvent le problème posé. En effet, l'émission d'au moins une séquence d'apprentissage comprenant au moins deux répliques d'une séquence d'apprentissage de base dont au moins une décalée temporellement, permet d'obtenir au moins deux estimées d'une même réponse impulsionnelle et donc de calculer une moyenne de ces différentes estimées. Ce calcul de moyenne améliore l'estimation de la réponse impulsionnelle d'un canal.

Selon un mode de réalisation particulier, un intervalle de garde est ajouté avant toute émission d'un symbole orthogonal et la contrainte sur la valeur minimale du décalage temporel est respectée en choisissant un décalage temporel minimal égal à la valeur de l'intervalle de garde.

Selon un mode de réalisation particulier, les répliques sont déterminées avantageusement dans le domaine fréquentiel et les décalages temporels des répliques sont obtenus par l'insertion d'un déphasage dont le calcul est aisé. Selon une première réalisation, les valeurs de déphasage sont choisies selon un ordre déterminé. En particulier, cet ordre est connu d'au moins un récepteur associé à une antenne de réception du système. Selon une deuxième réalisation, le déphasage est fonction d'un indice de porteuse.

Selon un mode de réalisation particulier, la séquence d'apprentissage de base est étalée sur plusieurs symboles orthogonaux..

Selon un mode de réalisation particulier, chacune des estimées des réponses impulsionnelles est calculée sur un intervalle temporel $\Delta t$ à partir des Np porteuses pilotes. Cette double limitation permet avantageusement de limiter les calculs et donc de réduire la puissance de calcul nécessaire pour la mise en oeuvre du procédé.

Selon un mode de réalisation particulier, le calcul des réponses impulsionnelles est répété pour chaque antenne de réception considérée du système multi-antennes. Ce mode est adapté à des systèmes comprenant plusieurs antennes de réception.

En outre, l'invention a pour objet un émetteur pour un système multi-antennes. L'émetteur comprend au moins un module d'émission selon un objet précédent.

En outre, l'invention a pour objet un récepteur pour un système multi-antennes. Le récepteur comprend au moins un module d'estimation des canaux de transmission selon un objet précédent.

En outre, l'invention a pour objet un système multi-antennes comprenant au moins un récepteur et/ou un émetteur selon un des objets précédents.

Selon un mode préféré, le système multi antennes a typiquement au moins deux antennes d'émission et est aussi bien un système MIMO, qu'un système MISO. Dans la suite du document, un système MIMO doit être compris comme un système à plusieurs antennes d'émission quel que soit le nombre d'antennes de réception ($Nr \geq 1$).

Selon une implémentation préférée, les étapes du procédé sont déterminées par les instructions d'un programme d'émission, respectivement d'estimation dans un circuit électronique telle une puce elle-même pouvant être disposée dans un dispositif électronique tel un émetteur, respectivement un récepteur. Le procédé d'émission, respectivement d'estimation, selon l'invention peut tout aussi bien être mis en oeuvre lorsque ce programme est chargé dans un organe de calcul tel un processeur ou équivalent dont le fonctionnement est alors commandé par l'exécution du programme.

En conséquence, l'invention s'applique également à un programme d'ordinateur, notamment un programme d'ordinateur sur ou dans un support d'informations, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter un procédé selon l'invention.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

Alternativement, le support d'informations peut être un circuit intégré dans lequel le programme est incorporé, le circuit étant adapté pour exécuter ou pour être utilisé dans l'exécution du procédé en question.

D'autre part, le programme d'émission ou d'estimation peut être traduit en une forme transmissible telle qu'un signal électrique ou optique, qui peut être acheminé via un câble électrique ou optique, par radio ou par d'autres moyens. Le programme selon l'invention peut être en particulier téléchargé sur un réseau de type Internet ou équivalent.

D'autres caractéristiques et avantages de l'invention apparaîtront lors de la description qui suit faite en regard de figures annexées données à titre d'exemples non limitatifs.

La figure 1 est une illustration d'une trame de type OFDM ("Orthogonal Frequency Division Multiplexing").

La figure 2 est une illustration d'une émission par un système à quatre antennes d'émission de séquences d'apprentissage chacune composée d'une impulsion temporelle décalée temporellement entre antennes, selon l'art antérieur.

La figure 3 est une illustration d'une émission par un système à une antenne d'émission d'une séquence d'apprentissage composée de deux répliques, dont une décalée temporellement, d'une séquence d'apprentissage de base égale à une impulsion temporelle, selon l'invention.

La figure 4 est une illustration d'une émission par un système à quatre antennes d'émission (Nt=4) de séquences d'apprentissage composées de répliques d'une séquence d'apprentissage de base égale à une impulsion temporelle, la séquence de l'antenne $TX_1$ étant composée de deux répliques dont une décalée temporellement, selon l'invention.

La figure 5 est un organigramme d'un procédé d'émission selon l'invention.

La figure 6 est un organigramme d'un procédé d'estimation selon l'invention.

La figure 7 est un schéma d'un système de transmission particulier selon l'invention permettant la mise en oeuvre d'un procédé selon l'invention.

La figure 8 est une représentation graphique de résultats de simulation.

La figure 3 est une illustration d'une émission d'une séquence d'apprentissage composée de deux répliques, dont une déphasée, d'une impulsion temporelle, selon l'invention.

Le cas illustré est celui d'un système à une antenne d'émission et une antenne de réception, à émission de trames temps fréquence avec séquence d'apprentissage. Dans ce cas et selon l'invention, la séquence d'apprentissage associée à l'antenne d'émission est composée d'au moins deux répliques, décalées temporellement entre elles, d'une séquence d'apprentissage de base. Selon l'illustration, la séquence d'apprentissage de base est une impulsion temporelle. Chacune de ses répliques permet de déterminer une estimée de la réponse du canal de transmission séparant l'antenne d'émission de l'antenne de réception. La réponse impulsionnelle du canal est alors déterminée selon l'invention comme étant la moyenne de ces deux estimées.

La figure 4 est une illustration d'une émission par un système à quatre antennes d'émission de séquences d'apprentissage composées de répliques d'une séquence d'apprentissage de base égale à une impulsion temporelle, la séquence d'apprentissage de l'antenne $TX_1$ étant composée de deux répliques dont une décalée temporellement, selon l'invention.

Selon l'invention, dans un système multi antennes à plusieurs antennes d'émission, la séquence d'apprentissage d'au moins une antenne d'émission est composée d'au moins deux répliques, décalées temporellement entre elles, d'une séquence d'apprentissage de base. Selon l'illustration, la séquence d'apprentissage de base est une impulsion temporelle et la séquence d'apprentissage de l'antenne $TX_1$ est composée de deux répliques décalées temporellement entre elles. Chacune de ces répliques permet de déterminer une estimée de la réponse du canal de transmission séparant l'antenne d'émission $TX_1$ de l'antenne de réception considérée, $RX_j$. La réponse du canal de transmission entre l'antenne d'émission $TX_1$ et l'antenne de réception $RX_j$ est alors déterminée selon l'invention comme étant la moyenne de ces deux estimées.

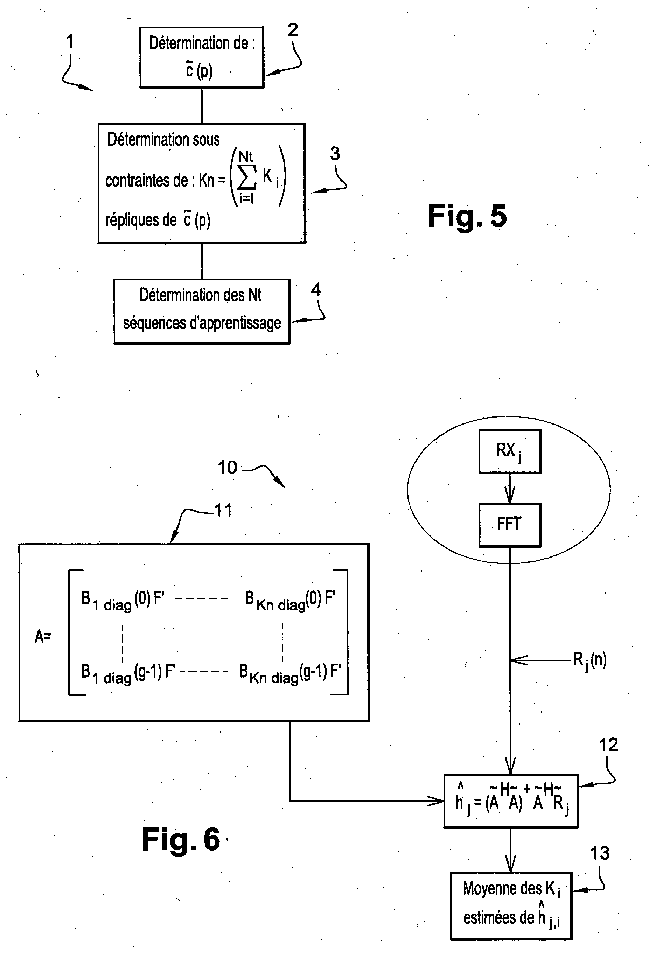

La figure 5 est un organigramme d'un procédé 1 d'émission selon l'invention.

Un procédé 1 d'émission selon l'invention est adapté pour un système à Nt antennes d'émission et Nr antennes de réception, où Nt et Nr sont supérieurs ou égaux à 1. Une antenne d'émission est séparée d'une antenne de réception par un sous canal de transmission. Le procédé est mis en oeuvre par Nt dispositifs d'émission multi porteuses comprenant chacun un module de multiplexage et de modulation par $N_{FFT}$ fonctions orthogonales formant des symboles orthogonaux destinés à être transmis par les Nt antennes d'émission $TX_1$, ..., $TX_{Nt}$. Le système met en oeuvre une trame temps fréquence par antenne d'émission comprenant des symboles pilotes et des symboles de données d'un signal utile. Les symboles de données et les symboles pilotes sont modulés en fréquence par un module de multiplexage et de modulation pour former des symboles orthogonaux qui sont émis par une antenne d'émission sous la forme d'un signal multi porteuses à $N_{FFT}$ porteuses avec Np porteuses pilotes.

Dans une première étape, le procédé 1 consiste à déterminer 2 une séquence d'apprentissage de base $\tilde{c}(p)$, avec p l'indice de porteuses pilotes.

Cette séquence est typiquement déterminée dans le domaine fréquentiel par la détermination des porteuses pilotes en nombre Np et leur répartition sur un ou plusieurs symboles orthogonaux. Ces symboles orthogonaux sont dits OFDM lorsque la modulation orthogonale en émission est de type OFDM. Quand la séquence d'apprentissage de base est répartie sur plusieurs symboles orthogonaux, les porteuses pilotes peuvent être identiques, différentes ou se recouvrir partiellement entre symboles orthogonaux. Pour exemple, une séquence d'apprentissage de base est une impulsion temporelle telle qu'illustrée par les figures 2, 3 et 4, une telle séquence peut s'écrire sous la forme $\tilde{c}(p) = 1$ pour $1 \leq p \leq Np.$

Dans une deuxième étape, le procédé consiste à déterminer 3 sous contraintes :

$$Kn = \left( \sum_{i=1}^{Nt} K_i \right) \qquad (1)$$

répliques d'indice n de la séquence d'apprentissage de base telles qu'au moins une réplique soit décalée temporellement de la séquence d'apprentissage de base. Les valeurs $K_i$ sont au moins supérieures ou égales à un et au moins une valeur $K_i$ est supérieure ou égale à deux. La détermination sous contraintes des répliques décalées ou pas temporellement est typiquement effectuée dans le domaine fréquentiel par l'introduction d'un déphasage d'une valeur $\varphi_n$ en multipliant la séquence d'apprentissage de base avec un facteur de rotation de phase selon l'expréssion :

$$\tilde{c}(p) \times e^{-j\varphi_n} = \tilde{c}(p) \times e^{-j2\pi p \frac{(n-1)}{Np} \Delta t} \qquad (2)$$

avec $1 \leq n \leq Kn$ et tout en vérifiant les contraintes suivantes.

Une première contrainte est que l'écart temporel extrême entre les différentes répliques de la séquence d'apprentissage de base préalablement déterminées soit inférieur au nombre Np de porteuses pilotes, soit :

$$Kn \times \Delta t \leq Np \qquad (3)$$

Une deuxième contrainte est que le décalage temporel minimal entre deux répliques de deux séquences d'apprentissage associées à deux antennes d'émission i et j, $\tilde{c}(p)_i$ et $\tilde{c}(p)_j$, avec i≠j, soit supérieur ou égal à l'étalement maximal des retards des différents sous canaux :

$$L \leq \Delta t \qquad (4)$$

avec $L$ l'étalement maximal des retards des différents sous-canaux.

En outre, une condition pour déterminer l'ensemble des réponses impulsionnelles est

$$Nt \times L \leq Np \qquad (5)$$

Cette condition est automatiquement remplie, si le décalage temporel $\Delta t$ choisi vérifie les deux contraintes précédentes.

Dans une troisième étape, le procédé détermine 4 la séquence d'apprentissage pour chaque antenne d'émission TX$_i$.

Pour au moins une antenne d'émission, TX$_i$, la séquence d'apprentissage est la somme de $K_i$ répliques, avec $K_i \geq 2$, de la séquence d'apprentissage de base avec au moins une réplique décalée temporellement de la séquence de base.

Selon un mode préféré de réalisation, l'expression des séquences d'apprentissage est donnée par l'expression, sous réserve de vérifier les contraintes (3), (4) et (5) :

$$\tilde{c}(p)_i = \tilde{c}(p) \sum_{k=1}^{K_i} e^{-j2\pi p \frac{(i+(k-1)Nt-1)}{Np} \Delta t} \qquad (6)$$

En particulier dans le cas où la valeur $K_i \geq 2$ est égale à deux, la séquence d'apprentissage d'au moins une antenne $TX_i$ correspond au calcul de l'expression :

$$\tilde{c}(p)_i = \tilde{c}(p)\, e^{-j2\pi \frac{p(i-1)\Delta t}{Np}} + \tilde{c}(p)\, e^{-j2\pi \frac{p(i+Nt-1)\Delta t}{Np}} \qquad (7)$$

Pour chacune des autres antennes $TX_i$, la séquence d'apprentissage comprend au moins une réplique déphasée de $\varphi_i$, avec $\varphi_i \geq 0$, de la séquence d'apprentissage de base, ce qui correspond au calcul de l'expression :

$$\tilde{c}(p)_i = \tilde{c}(p)\sum_{k=1}^{K_i} e^{-j\varphi_{i,k}} = \tilde{c}(p)\sum_{k=1}^{K_i} e^{-j2\pi p \frac{(i+(k-1)Nt-1)}{Np}\Delta t} \qquad (8)$$

, avec $K_i \geq 1$ le nombre de répliques composant la séquence d'apprentissage de l'antenne $TX_i$ et sous réserve de vérifier les contraintes (3), (4) et (5).

Selon un mode de réalisation particulier, la séquence d'apprentissage associée à chaque antenne d'émission est la somme de K répliques de la séquence d'apprentissage de base. De préférence, pour toute antenne d'émission $TX_i$, la séquence d'apprentissage est dans ce cas donnée par l'expression, sous réserve de vérifier les contraintes (3), (4) et (5) :

$$\tilde{c}(p)_i = \tilde{c}(p)\sum_{k=1}^{K} e^{-j2\pi p \frac{(i+(k-1)Nt-1)}{Np}\Delta t} \qquad (9)$$

Dans ce cas, Kn=NtxK.

L'exemple suivant est donné à titre d'illustration. Les paramètres du système prennent les valeurs suivantes : $N_{FFT} = N_{mod} = Np = 8$, $\Delta_t = 2$. $N_{FFT}$, $N_{mod}$ et Np sont respectivement la taille de la FFT, le nombre de porteuses modulées et le nombre de porteuses pilotes. Le nombre g de symboles orthogonaux sur lesquels est étalée la séquence d'apprentissage est pris égal à un. Le système est multi antennes avec deux antennes d'émission, Nt=2. Chaque séquence d'apprentissage est construite à partir de $K_1 = K_2 = 2$ répliques. Ceci donne :

$$\begin{cases} \tilde{c}(p)_1 = \tilde{c}(p)\, e^{-j2\pi \frac{p\times(1-1)\times 2}{8}} + \tilde{c}(p)\, e^{-j2\pi \frac{p\times(1+Nt-1)\times 2}{8}} = \tilde{c}(p) + \tilde{c}(p)\, e^{-j\pi p} \\[2em] \tilde{c}(p)_2 = \tilde{c}(p)\, e^{-j2\pi \frac{p\times(2-1)\times 2}{8}} + \tilde{c}(p)\, e^{-j2\pi \frac{p\times(2+Nt-1)\times 2}{8}} = \tilde{c}(p)\, e^{-j\frac{\pi}{2}p} + \tilde{c}(p)\, e^{-j\frac{3\pi}{2}p} \end{cases}$$

avec $\tilde{c}(p)$ le symbole pilote émis à la fréquence porteuse $p$ et appartenant à la séquence d'apprentissage de base. La contrainte $Kn \times \Delta t \leq Np$ est bien vérifiée puisque $(2+2)\times 2 = 8 \leq 8$. De manière arbitraire, $\tilde{c}(p)$ est choisi égal à un pour l'ensemble des porteuses pilotes. Le motif du symbole OFDM comprenant la séquence d'apprentissage de base est représenté sur le Tableau 1 en Annexe A. La première colonne du tableau 1 représente les indices fréquentiels et la seconde colonne le type de données associé (P symbole pilote).

Ce qui donne finalement pour les séquences d'apprentissage des deux antennes :

$$\begin{cases} \tilde{c}(p)_1 = 1 + e^{-j\pi p} \\[2em] \tilde{c}(p)_2 = e^{-j\frac{\pi}{2}p} + e^{-j\frac{3\pi}{2}p} \end{cases}$$

La figure 6 est un organigramme d'un procédé 10 d'estimation selon l'invention.

Un procédé 10 d'estimation selon l'invention permet d'estimer des canaux de transmission dans un système multi-antennes à au moins une antenne d'émission et une antenne de réception, $Nt \geq 1$ et $Nr \geq 1$. Un canal de transmission sépare une antenne d'émission $TX_i$ d'une antenne de réception $RX_j$. Un système multi-antennes émet une trame temps fréquence par antenne d'émission. Une trame temps-fréquence détermine dans le temps l'emplacement des symboles de données utiles et des symboles pilotes sur les différentes porteuses. La trame temps fréquence peut comporter en outre des symboles nuls mais comme ils n'interviennent pas dans le procédé d'estimation, ils ne sont pas pris en compte dans la description. La description ne prend pas non plus en compte les porteuses de garde qui n'interviennent pas non plus dans le procédé d'estimation. Pour une même antenne d'émission, les symboles pilotes forment une séquence d'apprentissage. Le procédé d'estimation selon l'invention est adapté pour des signaux émis selon un procédé d'émission selon un premier objet de l'invention mais il peut être mis en oeuvre pour d'autres types de signaux émis avec toutefois une perte d'efficacité.

La description qui suit du procédé d'estimation selon l'invention est faite en supposant que les signaux émis le sont selon un procédé d'émission selon un premier objet de l'invention.

Les répliques composant les Nt séquences d'apprentissage sont décalées temporellement entre elles d'au moins un intervalle temporel $\Delta t$. Les séquences d'apprentissage sont connues du récepteur et elles permettent à ce dernier d'estimer Nt réponses impulsionnelles qui correspondent aux Nt canaux de transmission. Pour une antenne d'émission donnée, les symboles de données et les symboles pilotes sont modulés en fréquence par un module de multiplexage et de modulation par $N_{FFT}$ fonctions orthogonales, couramment appelé multiplexeur orthogonal, pour former des symboles orthogonaux qui sont émis par l'antenne d'émission reliée au multiplexeur orthogonal, sous la forme d'un signal multi porteuses à $N_{FFT}$ porteuses avec Np porteuses pilotes. Les symboles pilotes peuvent être répartis, selon la trame temps fréquence considérée, sur un ou plusieurs symboles orthogonaux. La modulation est selon un mode de réalisation particulier une modulation OFDM.

Un procédé d'estimation selon l'invention intervient en réception après une étape de démodulation. La démodulation démodule un signal temporel reçu par l'antenne de réception $RX_j$ considérée au moyen d'une FFT de certaine taille, pour obtenir un signal fréquentiel $R_j(n)$ et en extraire Np symboles pilotes. Selon une réalisation particulière, la démodulation est une démodulation OFDM. Typiquement la taille de la FFT est déterminée en fonction de la taille de la FFT, $N_{FFT}$, effectuée lors de l'émission. Les tailles sont choisies typiquement identiques. A l'émission la FFT est de type inverse alors qu'en réception la FFT est de type direct.

A l'instant n, le signal issu de l'antenne de réception $RX_j$ peut s'exprimer dans le domaine fréquentiel, c'est-à-dire après suppression de l'intervalle de garde et après démodulation OFDM, sous la forme d'un vecteur colonne de dimension $N_{FFT}$:

$$\mathbf{R}_j(n) = \sum_{i=1}^{Nt} \mathrm{diag}\left\{\mathbf{X}_i(n)\right\} \mathbf{F} \mathbf{h}_{j,i}(n) + \Xi_j(n) \qquad (10)$$

avec $X_i(n)$ un vecteur colonne de dimension $N_{FFT}$, le symbole OFDM émis à l'instant n sur l'antenne $TX_i$,

F la matrice de Fourier de taille $N_{FFT} \times N_{FFT}$,

$h_{j,i}(n)$ le vecteur colonne représentant les $L$ échantillons de la réponse fréquentielle du sous-canal reliant l'antenne d'émission $TX_i$ à l'antenne de réception $RX_j$, et

$\Xi_j(n)$ le vecteur colonne de dimension $N_{FFT}$ représentant la transformée de Fourier d'un bruit additif blanc gaussien.

Pour simplifier avantageusement les calculs, le procédé d'estimation exploite le signal démodulé selon l'expression (10) uniquement sur la durée $\Delta t$ :

$$\mathbf{R}_j(n) = \sum_{i=1}^{Nt} \mathrm{diag}\left\{\mathbf{X}_i(n)\right\} \mathbf{F}' \mathbf{h}_{j,i}'(n) + \Xi_j(n) \qquad (11)$$

F' la matrice constituée par les $\Delta t$ premières colonnes de la matrice de Fourier F de taille $N_{FFT} \times N_{FFT}$, $h_{j,i}'$ un vecteur colonne de longueur $\Delta t$ dont les éléments des lignes au-delà de L sont à zéro :

$$\mathbf{h}_{j,i}' = \left[\mathbf{h}_{j,i}^T, \mathbf{0}_{\Delta t - L}\right]^T \qquad (12)$$

La notation diag{x} désigne une matrice diagonale ayant le vecteur colonne x sur sa diagonale :

$$\text{diag}\begin{bmatrix} a \\ b \\ c \end{bmatrix} = \begin{bmatrix} a & 0 & 0 \\ 0 & b & 0 \\ 0 & 0 & c \end{bmatrix} \tag{13}$$

La matrice de Fourier F est carrée, de dimensions $N_{FFT} \times N_{FFT}$, et de forme suivante :

$$\mathbf{F} = \frac{1}{\sqrt{N_{FFT}}} \begin{bmatrix} 1 & 1 & 1 & \cdots & 1 \\ 1 & w_{N_{FFT}} & w_{N_{FFT}}^2 & \cdots & w_{N_{FFT}}^{N_{FFT}-1} \\ \vdots & \vdots & \vdots & \cdots & \vdots \\ 1 & w_{N_{FFT}}^{N_{FFT}-1} & w_{N_{FFT}}^{2(N_{FFT}-1)} & \cdots & w_{N_{FFT}}^{(N_{FFT}-1)(N_{FFT}-1)} \end{bmatrix} \tag{14}$$

où $w_{N_{FFT}} = e^{-j\frac{2\pi}{N_{FFT}}}$. La matrice F' est directement déduite de F :

$$\mathbf{F}' = \frac{1}{\sqrt{N_{FFT}}} \begin{bmatrix} 1 & 1 & 1 & \cdots & 1 \\ 1 & w_{N_{FFT}} & w_{N_{FFT}}^2 & \cdots & w_{N_{FFT}}^{\Delta t-1} \\ \vdots & \vdots & \vdots & \cdots & \vdots \\ 1 & w_{N_{FFT}}^{N_{FFT}-1} & w_{N_{FFT}}^{2(N_{FFT}-1)} & \cdots & w_{N_{FFT}}^{(\Delta t-1)(\Delta t-1)} \end{bmatrix} \tag{15}$$

Le procédé 10 d'estimation selon l'invention comprend une étape 11 de calcul d'une matrice A et, pour une antenne de réception $RX_j$ considérée, une étape 12 de calcul dans le domaine temporel d'estimées des Nt réponses impulsionnelles des Nt canaux séparant respectivement une antenne d'émission $TX_i$ de l'antenne de réception $RX_j$ considérée. Le procédé comprend en outre une étape 13 de calcul de moyenne des estimées d'une réponse impulsionnelle.

Pour obtenir les Nr x Nt canaux, il faut répéter les étapes 12 et 13 pour les différentes antennes de réception $RX_j$.

L'étape 11 de calcul calcule une matrice A construite sous forme de blocs à partir des séquences d'apprentissage et de la matrice de Fourier de dimensions $N_{FFT} \times N_{FFT}$. Le nombre de blocs est égal au produit du nombre de symboles orthogonaux de la séquence d'apprentissage de base par la somme des $K_i$. Chaque bloc est associé à une antenne d'émission et un symbole orthogonal sur lequel est étalée la séquence d'apprentissage. Un bloc est déterminé par le produit de la matrice diagonale formée par les symboles pilotes liés au bloc et de la matrice de Fourier. Pour limiter avantageusement les calculs, la matrice de Fourier est limitée aux porteuses pilotes et à $\Delta t$ échantillons temporels car $\Delta t$ est supérieur ou égal à l'étalement maximum de la réponse temporelle du canal.

Chaque symbole OFDM émis à l'instant n par l'antenne d'émission $TX_i$, $X_i(n)$, peut être décomposé en un vecteur contenant les symboles de données et un vecteur contenant les symboles pilotes :

$$\mathbf{X}_i(n) = \mathbf{S}_i(n) + \mathbf{B}_i(n) \tag{16}$$

avec $S_i(n)$ le vecteur des symboles de données utiles de dimension $N_{FFT}$ et $\mathbf{B}_i(n)$ le vecteur des symboles pilotes de même dimension.

L'équation (11) peut donc s'exprimer sous la forme :

$$\mathbf{R}_j(n) = \sum_{i=1}^{Nt} \text{diag}\left\{\mathbf{S}_i(n) + \mathbf{B}_i(n)\right\} \mathbf{F} \mathbf{h}_{j,i}'(n) + \Xi_j(n) \tag{17}$$

Sachant que $\Delta t \geq L$, il peut être imposé $\Delta t = L$. Avec cette condition, l'accumulation des vecteurs reçus, correspondants aux g symboles orthogonaux émis par antenne d'émission contenant des symboles pilotes composant une séquence d'apprentissage, peut s'exprimer sous la forme :

$$\begin{aligned}
\mathbf{R}_j &= \left[\mathbf{R}_j(0)^T \ldots \mathbf{R}_j(g\text{-}1)^T\right]^T \\
&= \mathbf{T}\mathbf{h}_j' + \mathbf{A}\mathbf{h}_j' + \Xi_j
\end{aligned} \tag{18}$$

avec $\mathbf{R}_j$ un vecteur colonne de dimension $N_{FFT}$xg,

T une matrice de dimensions $(N_{FFT}$xg$)$ x $(Kn$x$\Delta t)$ contenant les symboles de données utiles pendant les séquences d'apprentissage des Nt antennes d'émission,

$$\mathbf{T} = \begin{bmatrix} \mathbf{S}_{1diag}(0)\mathbf{F}' & \ldots & \mathbf{S}_{Kn\,diag}(0)\mathbf{F}' \\ \vdots & & \vdots \\ \mathbf{S}_{1diag}(g\text{-}1)\mathbf{F}' & \ldots & \mathbf{S}_{Kn\,diag}(g\text{-}1)\mathbf{F}' \end{bmatrix} \tag{19},$$

A une matrice de dimensions $(N_{FFT}$xg$)$ x $(Kn$x$\Delta t)$ contenant les symboles pilotes des séquences d'apprentissage des $N_t$ antennes d'émission,

$$\mathbf{A} = \begin{bmatrix} \mathbf{B}_{1diag}(0)\mathbf{F}' & \ldots & \mathbf{B}_{Kn\,diag}(0)\mathbf{F}' \\ \vdots & & \vdots \\ \mathbf{B}_{1diag}(g\text{-}1)\mathbf{F}' & \ldots & \mathbf{B}_{Kn\,diag}(g\text{-}1)\mathbf{F}' \end{bmatrix} \tag{20},$$

$\mathbf{h}_j'$ le vecteur colonne de dimension $Kn$x$\Delta t$ contenant les Kn expressions des estimées des Nt réponses impulsionnelles,

$$\mathbf{h}_j' = \left[\mathbf{h}_{j,1}'^T, \ldots, \mathbf{h}_{j,Kn}'^T\right]^T \tag{21},$$

$\Xi_j$ le vecteur colonne de dimension $N_{FFT}$xg contenant g représentations de la transformée de Fourier d'un bruit additif blanc gaussien.

La matrice A déterminé au cours de l'étape 11 s'exprime donc sous la forme:

$$\mathbf{A} = \begin{bmatrix} \mathbf{B}_{1_{diag}}(0)\mathbf{F}' & \cdots & \mathbf{B}_{Nt_{diag}}(0)\mathbf{F}' & \mathbf{B}_{Nt+1_{diag}}(0)\mathbf{F}' & \cdots & \mathbf{B}_{\sum_{i=1}^{Nt} K_i * N_{t_{diag}}}(0)\mathbf{F}' \\ \vdots & & \vdots & \vdots & & \vdots \\ \mathbf{B}_{1_{diag}}(g\text{-}1)\mathbf{F}' & \cdots & \mathbf{B}_{Nt_{diag}}(g\text{-}1)\mathbf{F}' & \mathbf{B}_{Nt+1_{diag}}(g\text{-}1)\mathbf{F}' & \cdots & \mathbf{B}_{\sum_{i=1}^{Nt} K_i * N_{t_{diag}}}(g-1)\mathbf{F}' \end{bmatrix}$$

(22)

L'étape 12 de calcul des Kn estimées des Nt réponses impulsionnelles dans le domaine temporel multiplie le vecteur $\mathbf{R}_j$, dont l'expression dans le domaine fréquentiel en sortie de démodulation correspond aux Np porteuses pilotes, avec le pseudo inverse de la matrice A selon la technique de Barhumi :

$$\hat{\mathbf{h}}_j = \mathbf{A}^+ \mathbf{R}_j \qquad (23)$$

où le symbole $^+$ signifie pseudo-inverse. On appelle pseudo-inverse l'opération suivante :

$$\mathbf{A}^+ = \left(\mathbf{A}^H \mathbf{A}\right)^{-1} \mathbf{A}^H \qquad (24)$$

Pour éliminer les termes d'interférences dus aux données présentes dans le symbole OFDM, il est nécessaire d'avoir le produit de $\mathbf{A}^+$ et de $\mathbf{T}$ égal à une matrice nulle, ce qui est rendu possible en imposant des ensembles disjoints aux symboles pilotes et aux données. En outre, le calcul des réponses impulsionnelles peut être simplifié en ne considérant dans les équations que les fréquences dédiées à l'estimation de canal, c'est-à-dire en limitant les calculs aux porteuses pilotes :

$$\hat{\mathbf{h}}_j = \tilde{\mathbf{A}}^+ \tilde{\mathbf{R}}_j \qquad (25)$$

avec $\mathbf{R}_j$ la matrice correspondante à $\mathbf{R}_j$ en ne considérant que les porteuses pilotes et la matrice $\tilde{\mathbf{A}}$ ayant pour expression :

$$\tilde{\mathbf{A}} = \begin{bmatrix} \tilde{\mathbf{B}}_{1_{diag}}(0)\tilde{\mathbf{F}}' & \cdots & \tilde{\mathbf{B}}_{Kn_{diag}}(0)\tilde{\mathbf{F}}' \\ \vdots & & \vdots \\ \tilde{\mathbf{B}}_{1_{diag}}(g\text{-}1)\tilde{\mathbf{F}}' & \cdots & \tilde{\mathbf{B}}_{Kn_{diag}}(g\text{-}1)\tilde{\mathbf{F}}' \end{bmatrix} \qquad (26)$$

ou encore :

$$\tilde{\mathbf{A}} = \begin{bmatrix} \tilde{\mathbf{B}}_{1\,diag}(0)\tilde{\mathbf{F}}' & \cdots & \tilde{\mathbf{B}}_{Nt\,diag}(0)\tilde{\mathbf{F}}' & \tilde{\mathbf{B}}_{Nt+1\,diag}(0)\tilde{\mathbf{F}}' & \cdots & \tilde{\mathbf{B}}_{\sum_{i=1}^{Nt} K_i * N_t\,diag}(0)\tilde{\mathbf{F}}' \\ \vdots & & \vdots & \vdots & & \vdots \\ \tilde{\mathbf{B}}_{1\,diag}(g\text{-}1)\tilde{\mathbf{F}}' & \cdots & \tilde{\mathbf{B}}_{Nt\,diag}(g\text{-}1)\tilde{\mathbf{F}}' & \tilde{\mathbf{B}}_{Nt+1\,diag}(g\text{-}1)\tilde{\mathbf{F}}' & \cdots & \tilde{\mathbf{B}}_{\sum_{i=1}^{Nt} K_i * N_t\,diag}(g-1)\tilde{\mathbf{F}}' \end{bmatrix}$$

(27)

L'expression vectorielle de la première estimée de la réponse impulsionnelle $\hat{h}_{j,i}$ du canal séparant l'antenne d'émission i déterminée, pour i prenant une valeur entre 1 et Nt, de l'antenne de réception j déterminée, pour j prenant une valeur entre 1 et Nr, est obtenue en effectuant une sélection des Np échantillons successifs du vecteur colonne $\hat{h}_j$, calculé pour l'antenne de réception j, en partant de l'échantillon (i-1)Δt. Pour la deuxième estimée de la réponse impulsionnelle du canal $\hat{h}_{j,i}$ la sélection est faite en partant de l'échantillon $Nt \times \Delta t + (i\text{ -}1)\Delta t = (Nt + i\text{ -}1)\Delta t$. Pour la nième estimée de la réponse impulsionnelle du canal $\hat{h}_{j,i}$, la sélection est faite en partant de l'échantillon $(n \times Nt + 1)\Delta t$.

L'étape 13 consiste à calculer la moyenne temporelle des $K_i$ estimées d'une réponse impulsionnelle. Selon une variante, cette moyenne est effectuée dans le domaine fréquentiel. Cette étape est de préférence répétée pour tous les canaux pour lesquels $K_i$ est strictement supérieur à un.

Selon un mode particulier de mise en oeuvre du procédé, le calcul des NtxNr réponses impulsionnelles précédemment décrit pour les Np porteuses pilotes est complété par une interpolation qui peut être linéaire en temps ou en fréquence (interpolation de type une dimension, 1D) pour obtenir les coefficients de chaque canal pour l'ensemble des porteuses modulées avec des données utiles. L'interpolation peut éventuellement être d'un ordre supérieur à un. L'interpolation peut être effectuée dans le domaine fréquentiel en multipliant les Nt vecteurs de Δt points avec une matrice de taille $N_{FFT} \times \Delta t$ extraite d'une matrice de Fourier de taille $N_{FFT} \times N_{FFT}$.

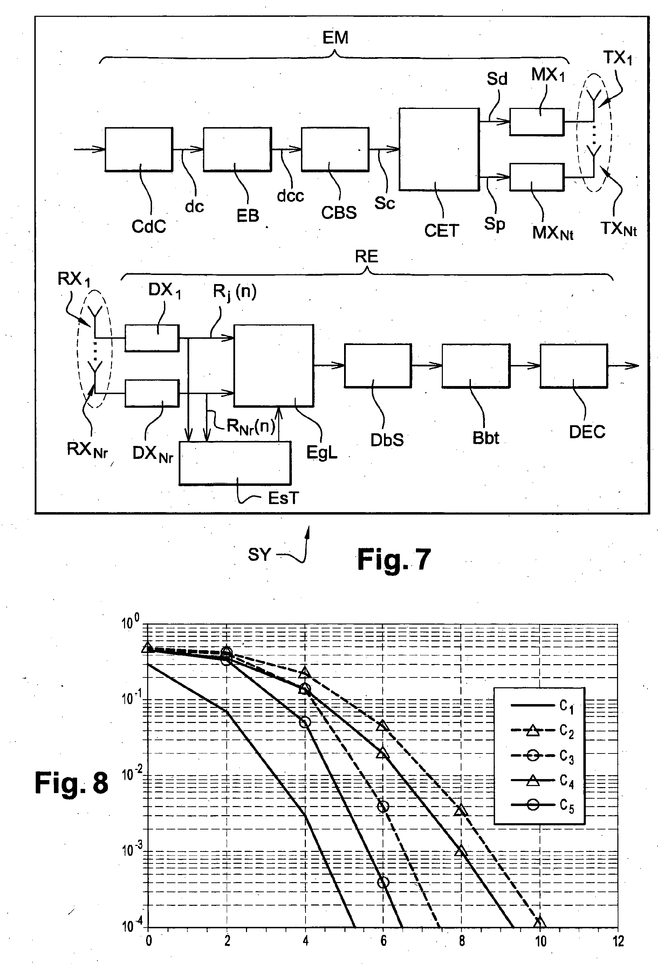

La figure 7 est un schéma d'un système de transmission particulier permettant la mise en oeuvre d'un procédé selon l'invention.

Le système SY de transmission comprend un dispositif d'émission EM multi porteuses et un dispositif de réception RE. Le dispositif d'émission EM est relié à Nt antennes d'émission $TX_1$, ..., $TX_{Nt}$, avec $Nt \geq 2$. Le dispositif de réception RE est relié à Nr antennes de réception $RX_1$, ... , $RX_{Nr}$, avec $Nr \geq 1$.

Selon l'exemple illustré, le dispositif d'émission EM comprend un module de codage canal CdC, un entrelaceur bits EB, un module de codage binaire à symbole CBS, un module de codage espace-temps CET, autant de multiplex OFDM MX que d'antennes d'émission.

Le module de codage de canal CdC code des données sources d'entrée, correspondant à un ou plusieurs signaux typiquement de télécommunication, pour fournir en sortie des données codées de, par exemple avec un code convolutionnel.

L'entrelaceur bits entrelace, selon une loi d'entrelacement déterminée, les bits des données codées pour fournir des données codées entrelacées dce.

Le module de codage binaire à symbole CBS transforme les données codées entrelacées dce en symboles de données complexes sc, par exemple par une modulation BPSK, QPSK ou 16QAM.

Le module de codage espace-temps CET détermine à partir des symboles de données complexes sc une matrice à deux dimensions de symboles de données sd, selon un codage par exemple de type Alamouti, et génère des symboles pilotes.

Chaque multiplex OFDM effectue une modulation des symboles de données sd et de symboles pilotes sp, insérés en entrée du multiplex, par des sous-porteuses sinusoïdales dont les fonctions orthogonales sont les composantes de Fourier conjuguées d'une transformation de Fourier inverse de taille $N_{FFT}$ correspondant au nombre de porteuses d'un multiplex OFDM. Les $N_{FFT}$ porteuses comprennent $N_{mod}$ porteuses de données modulées et Np porteuses pilotes. L'ensemble formé de $N_{FFT}$ porteuses est appelé symbole OFDM. Le symbole OFDM peut comporter des porteuses nulles et des porteuses de garde non modulées. La sortie d'un multiplex OFDM constitue le signal OFDM en temps sans intervalle de garde.

Avant émission, le dispositif d'émission insère un intervalle de garde au signal OFDM.

Les signaux émis comportent des séquences d'apprentissage. Pour chaque antenne d'émission considérée, une séquence d'apprentissage comprend au moins une réplique déphasée ou pas d'une séquence d'apprentissage de base. Cette séquence d'apprentissage de base est déterminée par le positionnement de Np symboles pilotes contenus dans un ou plusieurs symboles OFDM, soit g le nombre de ces symboles OFDM. La séquence d'apprentissage de base est donc déterminée par le nombre g, l'amplitude des symboles pilotes et les porteuses pilotes. Entre deux séquences d'apprentissage associées à deux antennes d'émission, les répliques sont décalées entre elles dans le temps au minimum d'un intervalle Δt au moins égal à la longueur maximale L des canaux de transmission, *Δt ≥ L,* pour que les réponses impulsionnelles des différents canaux n'interfèrent pas entre elles. On appelle longueur d'un canal la durée de transmission du canal ou encore le retard introduit par le canal lors de la transmission.

Dans tout le document, l'intervalle Δt doit être compris comme étant un nombre d'intervalles temporels séparant des échantillons. Le décalage temporel est typiquement effectué avant la modulation, par exemple OFDM, par déphasage dans le domaine fréquentiel des répliques.

La séquence d'apprentissage de base s'exprime sous la forme d'une suite de symboles pilotes : $\tilde{c}(p)$, p = 0,..., $Np-1$ avec $\tilde{c}(p)$ le symbole pilote émis sur la fréquence porteuse d'indice p. Cette séquence d'apprentissage de base est étalée sur g symboles orthogonaux d'une trame temps fréquence. D'autre part, la condition pour déterminer l'ensemble des réponses impulsionnelles est :

$$Kn \times \Delta t \leq Np$$

avec $Kn = \left( \sum_{i=1}^{Nt} K_i \right).$

Pour l'exemple, g est choisi égal à un, Nt égal à deux, $N_{FFT}$ égal à huit, Np égal à huit, $K_1$ et $K_2$ égaux à deux et Δt égal à deux. Ces paramètres vérifient la relation précédente car (2+2)×2≤8.

La séquence d'apprentissage émise par l'antenne d'émission $TX_1$ est constituée de deux répliques de la séquence d'apprentissage de base, dont une réplique déphasée. Son expression est la suivante :

$$\tilde{c}(p)_1 = \tilde{c}(p)\, e^{-j2\pi\frac{p\times(1-1)\times 2}{8}} + \tilde{c}(p)\, e^{-j2\pi\frac{p\times(1+Nt-1)\times 2}{8}} = \tilde{c}(p) + \tilde{c}(p)\, e^{-j\pi p}$$

La séquence d'apprentissage émise par l'antenne d'émission $TX_2$ est constituée également de deux répliques de la séquence d'apprentissage de base, dont les deux sont déphasées. Son expression est la suivante :

$$\tilde{c}(p)_2 = \tilde{c}(p)\, e^{-j2\pi\frac{p\times(2-1)\times 2}{8}} + \tilde{c}(p)\, e^{-j2\pi\frac{p\times(2+Nt-1)\times 2}{8}} = \tilde{c}(p)\, e^{-j\frac{\pi}{2}p} + \tilde{c}(p)\, e^{-j\frac{3\pi}{2}p}$$

Selon l'exemple illustré par la figure 7, le dispositif de réception RE comprend autant de démultiplex OFDM $DX_1$, ... , $DX_{Nr}$ que d'antennes de réception $RX_1$, ... , $RX_{Nr}$. Il comprend en outre un module d'estimation des canaux EsT, un module d'égalisation EgL, un module de décodage binaire à symbole DbS, un desentrelaceur bits Dbt, un module de décodage canal DEC.

Chaque signal reçu par une antenne de réception est traité par un démultiplex OFDM. Un démultiplex OFDM effectue la fonction inverse d'un multiplex OFDM. Ainsi, un démultiplex OFDM effectue une transformée de Fourier direct de taille $N_{FFT}$ du signal reçu, après suppression de l'intervalle de garde. Un démultiplex OFDM démodule un signal temporel reçu par l'antenne de réception $RX_j$ considérée au moyen d'une FFT de taille $N_{FFT}$, pour obtenir un signal fréquentiel $R_j(n)$ cumulant les Np symboles pilotes des séquences d'apprentissage des différentes antennes d'émission.

Les sorties des démultiplexeurs OFDM fournissent des signaux OFDM $R_j(n)$ dans le domaine fréquentiel qui sont exploités par le module d'estimation et par le module d'égalisation.

Le module d'estimation des canaux comprend des moyens pour calculer la matrice A selon la relation (22) ou (27). Ces moyens sont typiquement des instructions d'un programme qui lors d'une implémentation préférée vont être incorporées dans un circuit électronique, un organe de calcul tel un processeur ou équivalent dont le fonctionnement est alors commandé par l'exécution du programme.

Le module d'estimation des canaux comprend des moyens pour calculer les $K_i$ estimées de chacune des Nt réponses impulsionnelles **h,** selon la relation (25). Ces moyens sont typiquement des instructions d'un programme qui lors d'une implémentation préférée vont être incorporées dans un circuit électronique, un organe de calcul tel un processeur ou équivalent dont le fonctionnement est alors commandé par l'exécution du programme.

Connaissant les paramètres du système multi antennes : la taille de la FFT, $N_{FFT}$, le nombre de porteuses modulées, $N_{mod}$, le décalage entre séquences de référence, $\Delta t$, le nombre de symboles OFDM pilotés formant une séquence de référence, g, l'amplitude des symboles pilotes, $\bar{c}(p)$, un procédé et un module d'estimation selon l'invention permettent avantageusement de pré-calculer la matrice correspondant à l'expression :

$$\tilde{A}^+ = \left( \tilde{A}^H \tilde{A} \right)^{-1} \tilde{A}^H \tag{28}.$$

la matrice $\overline{A}$ étant donnée par la relation (26) ou (27).

Selon un mode préféré, le procédé, respectivement le module d'estimation, multiplie ce produit pré-calculé de matrices avec le signal OFDM démodulé pour obtenir les $K_i$ estimées de chaque canal accumulées dans l'expression $\hat{h}_j$ selon la relation (25).

L'expression vectorielle de la première estimée de la réponse impulsionnelle du canal $\hat{h}_{j,i}$ séparant l'antenne d'émission i déterminée, pour i prenant une valeur entre 1 et Nt, de l'antenne de réception j déterminée, pour j prenant une valeur entre 1 et Nr, est obtenue en effectuant une sélection des Np échantillons successifs du vecteur colonne $\hat{h}_j$, calculé pour l'antenne de réception j, en partant de l'échantillon $(i-1)\Delta t$. Pour la deuxième estimée de la réponse impulsionnelle du canal $\hat{h}_{j,i}$, la sélection est faite en partant de l'échantillon $Nt \times \Delta t + (i-1)\Delta t = (Nt + i - 1)\Delta t$. Pour la nième estimée de la réponse impulsionnelle du canal $\hat{h}_{j,i}$, la sélection est faite en partant de l'échantillon $(n \times Nt + i)\Delta t$.

Pour obtenir les différentes estimées des NrxNt canaux, il faut répéter le calcul de $\hat{h}_{j,i}$ pour j variant de 1 à Nr.

Le module d'estimation des canaux comprend des moyens pour calculer une moyenne des $K_i$ estimées d'une réponse impulsionnelle et obtenir ainsi Nt réponses impulsionnelles.

Les deux exemples suivants permettent d'illustrer le calcul de l'expression de $\tilde{A}$. Premier exemple. Le système de transmission comprend Nt=2 antennes d'émission et Nr=1 antenne de réception. Les paramètres du système prennent les valeurs suivantes : $N_{FFT}$ =8, $N_{mod}$=8, $\Delta t$=2, $K_1$=$K_2$=2.

La relation $\sum_{i=1}^{Nt} K_i \times \Delta t \leq Np$ est satisfaite car $(2 + 2) \times 2 = 8 \leq 8$.

Un seul symbole OFDM est supposé nécessaire à l'estimation de canal, g=1, et le motif de ce symbole OFDM, qui constitue la séquence d'apprentissage de base est représenté sur le Tableau 1. La première colonne représente les indices fréquentiels et la seconde colonne le type de données associé (P symbole pilote). L'équation (6) donne l'expression du symbole pilote modulant la porteuse p en ce qui concerne la séquence d'apprentissage émise par l'antenne d'émission $TX_i$, avec i = 1 ou 2 :

$$\tilde{c}(p)_1 = \tilde{c}(p)\, e^{-j2\pi \frac{p \times (1-1) \times 2}{8}} + \tilde{c}(p)\, e^{-j2\pi \frac{p \times (1+Nt-1) \times 2}{8}} = \tilde{c}(p) + \tilde{c}(p)\, e^{-j\pi p}$$

$$\tilde{c}(p)_2 = \tilde{c}(p)\, e^{-j2\pi \frac{p \times (2-1) \times 2}{8}} + \tilde{c}(p)\, e^{-j2\pi \frac{p \times (2+Nt-1) \times 2}{8}} = \tilde{c}(p)\, e^{-j\frac{\pi}{2}p} + \tilde{c}(p)\, e^{-j\frac{3\pi}{2}p}$$

$c(p)_1$ est donc le symbole pilote modulant la fréquence porteuse p en ce qui concerne la séquence d'apprentissage émise par l'antenne d'émission $TX_1$ et $c(p)_2$ est le symbole pilote modulant la fréquence porteuse $p$ en ce qui concerne la séquence d'apprentissage émise par l'antenne d'émission $TX_2$.

Pour l'exemple, $c(p)_1$=1 pour l'ensemble des porteuses pilotes. Les vecteurs des symboles pilotes $B_1$ et $B_3$, respectivement $B_2$ et $B_4$, correspondant aux deux estimées de la réponse impulsionnelle du canal reliant l'antenne $TX_1$ à l'antenne $RX_j$ respectivement l'antenne $TX_2$ à l'antenne $RX_j$, s'expriment alors sous la forme :

$$\mathbf{B}_1 = \begin{bmatrix} 1 \\ 1 \\ 1 \\ 1 \\ 1 \\ 1 \\ 1 \\ 1 \end{bmatrix} ; \mathbf{B}_2 = \begin{bmatrix} 1 \\ e^{-j\frac{\pi}{2}} \\ -1 \\ e^{-j\frac{3\pi}{2}} \\ 1 \\ e^{-j\frac{\pi}{2}} \\ -1 \\ e^{-j\frac{3\pi}{2}} \end{bmatrix} ; \mathbf{B}_3 = \begin{bmatrix} 1 \\ -1 \\ 1 \\ -1 \\ 1 \\ -1 \\ 1 \\ -1 \end{bmatrix} ; \mathbf{B}_4 = \begin{bmatrix} 1 \\ e^{-j\frac{3\pi}{2}} \\ -1 \\ e^{-j\frac{\pi}{2}} \\ 1 \\ e^{-j\frac{3\pi}{2}} \\ -1 \\ e^{-j\frac{\pi}{2}} \end{bmatrix}$$

La matrice de Fourier F est la suivante :

$$\mathbf{F} = \frac{1}{\sqrt{8}} \begin{bmatrix} 1 & 1 & 1 & 1 & 1 & 1 & 1 & 1 \\ 1 & 0.707-0.707j & -j & -0.707-0.707j & -1 & -0.707+0.707j & j & 0.707+0.707j \\ 1 & -j & -1 & j & 1 & -j & -1 & j \\ 1 & -0.707-0.707j & j & 0.707-0.707j & -1 & 0.707+0.707j & -j & -0.707+0.707j \\ 1 & -1 & 1 & -1 & 1 & -1 & 1 & -1 \\ 1 & -0.707+0.707j & -j & 0.707+0.707j & -1 & 0.707-0.707j & j & -0.707-0.707j \\ 1 & j & -1 & -j & 1 & j & -1 & -j \\ 1 & 0.707+0.707j & j & -0.707+0.707j & -1 & -0.707-0.707j & -j & 0.707-0.707j \end{bmatrix}$$

dans laquelle le symbole $j$ représente l'unité imaginaire, c'est-à-dire la solution de l'équation $j^2=-1$. La matrice F' s'exprime sous la forme suivante :

$$\mathbf{F}' = \frac{1}{\sqrt{8}} \begin{bmatrix} 1 & 1 \\ 1 & 0.707-0.707j \\ 1 & -j \\ 1 & -0.707-0.707j \\ 1 & -1 \\ 1 & -0.707+0.707j \\ 1 & j \\ 1 & 0.707+0.707j \end{bmatrix}$$

La matrice $\tilde{\mathbf{A}}$ s'exprime alors sous la forme suivante :

$$\tilde{\mathbf{A}} = \frac{1}{\sqrt{8}} \begin{bmatrix} \tilde{\mathbf{B}}_{1diag}\tilde{\mathbf{F}}' & \tilde{\mathbf{B}}_{2diag}\tilde{\mathbf{F}}' & \tilde{\mathbf{B}}_{3diag}\tilde{\mathbf{F}}' & \tilde{\mathbf{B}}_{4diag}\tilde{\mathbf{F}}' \end{bmatrix}$$

soit :

$$\tilde{\mathbf{A}} = \frac{1}{\sqrt{8}} \begin{bmatrix} 1 & 1 & 1 & 1 \\ 1 & e^{-j\frac{3\pi}{4}} & -1 & e^{j\frac{\pi}{4}} \\ 1 & j & 1 & j \\ 1 & e^{-j\frac{\pi}{4}} & -1 & e^{j\frac{3\pi}{4}} \\ 1 & -1 & 1 & -1 \\ 1 & e^{j\frac{\pi}{4}} & -1 & e^{-j\frac{3\pi}{4}} \\ 1 & -j & 1 & -j \\ 1 & e^{j\frac{3\pi}{4}} & -1 & e^{-j\frac{\pi}{4}} \end{bmatrix}$$

Second exemple. Le système de transmission comprend Nt=3 antennes d'émission et Nr=1 antenne de réception. Les paramètres du système prennent les valeurs suivantes : $N_{FFT}$ =8, $N_{mod}$=Np=8, $\Delta t$=2, $K_1$=2 et $K_2$=$K_3$=1.

La relation $\sum_{i=1}^{Nt} K_i \times \Delta t \le Np$ est satisfaite car (2 + 1 + 1) $\times$ 2 = 8 $\le$ 8.

Un seul symbole OFDM est supposé nécessaire à l'estimation de canal, g=1, et le motif de ce symbole OFDM, qui constitue la séquence d'apprentissage de base est représenté sur le Tableau 1. L'équation (6) donne l'expression du symbole pilote modulant la porteuse p en ce qui concerne la séquence d'apprentissage émise par l'antenne d'émission $TX_i$, avec i = 1, 2 ou 3

$$\tilde{c}(p)_1 = \tilde{c}(p)\, e^{-j2\pi\frac{p\times(1-1)\times 2}{8}} + \tilde{c}(p)\, e^{-j2\pi\frac{p\times(1+Nt-1)\times 2}{8}} = \tilde{c}(p) + \tilde{c}(p)\, e^{-j\frac{3}{2}\pi p}$$

$$\tilde{c}(p)_2 = \tilde{c}(p)\, e^{-j2\pi\frac{p\times(2-1)\times 2}{8}} = \tilde{c}(p)\, e^{-j\frac{\pi}{2}p}$$

$$\tilde{c}(p)_3 = \tilde{c}(p)\, e^{-j2\pi\frac{p\times(3-1)\times 2}{8}} = \tilde{c}(p)\, e^{-j\pi p}$$

$c(p)_1$ est donc le symbole pilote modulant la fréquence porteuse p en ce qui concerne la séquence d'apprentissage émise par l'antenne d'émission $TX_1$, $c(p)_2$ est le symbole pilote modulant la fréquence porteuse p en ce qui concerne la séquence d'apprentissage émise par l'antenne d'émission $TX_2$ et $c(p)_3$ est le symbole pilote modulant la fréquence porteuse p en ce qui concerne la séquence de référence émise par l'antenne d'émission $TX_3$.

Pour l'exemple, $c(p)$ = 1 pour l'ensemble des porteuses pilotes. Les vecteurs des symboles pilotes $B_1$ et $B_4$, respectivement $B_2$ et $B_3$, correspondant aux deux estimées de la réponse impulsionnelle du canal reliant l'antenne $TX_1$ à l'antenne RXj respectivement à l'estimée de la réponse impulsionnelle du canal reliant l'antenne $TX_2$ à l'antenne RXj et à l'estimée de la réponse impulsionnelle du canal reliant l'antenne $TX_3$ à l'antenne RXj, s'expriment alors sous la forme :

$$B_1 = \begin{bmatrix} 1 \\ 1 \\ 1 \\ 1 \\ 1 \\ 1 \\ 1 \\ 1 \end{bmatrix} ; \quad B_2 = \begin{bmatrix} 1 \\ e^{-j\frac{\pi}{2}} \\ -1 \\ e^{-j\frac{3\pi}{2}} \\ 1 \\ e^{-j\frac{\pi}{2}} \\ -1 \\ e^{-j\frac{3\pi}{2}} \end{bmatrix} ; B_3 = \begin{bmatrix} 1 \\ -1 \\ 1 \\ -1 \\ 1 \\ -1 \\ 1 \\ -1 \end{bmatrix} ; B_4 = \begin{bmatrix} 1 \\ e^{-j\frac{3\pi}{2}} \\ -1 \\ e^{-j\frac{\pi}{2}} \\ 1 \\ e^{-j\frac{3\pi}{2}} \\ -1 \\ e^{-j\frac{\pi}{2}} \end{bmatrix}$$

La matrice de Fourier F est la suivante :

$$F = \frac{1}{\sqrt{8}} \begin{bmatrix} 1 & 1 & 1 & 1 & 1 & 1 & 1 & 1 \\ 1 & 0.707-0.707j & -j & -0.707-0.707j & -1 & -0.707+0.707j & j & 0.707+0.707j \\ 1 & -j & -1 & j & 1 & -j & -1 & j \\ 1 & -0.707-0.707j & j & 0.707-0.707j & -1 & 0.707+0.707j & -j & -0.707+0.707j \\ 1 & -1 & 1 & -1 & 1 & -1 & 1 & -1 \\ 1 & -0.707+0.707j & -j & 0.707+0.707j & -1 & 0.707-0.707j & j & -0.707-0.707j \\ 1 & j & -1 & -j & 1 & j & -1 & -j \\ 1 & 0.707+0.707j & j & -0.707+0.707j & -1 & -0.707-0.707j & -j & 0.707-0.707j \end{bmatrix}$$

dans laquelle le symbole $j$ représente l'unité imaginaire, c'est-à-dire la solution de l'équation $j^2=-1$. La matrice F' s'exprime sous la forme suivante :

$$F' = \frac{1}{\sqrt{8}} \begin{bmatrix} 1 & 1 \\ 1 & 0.707-0.707j \\ 1 & -j \\ 1 & -0.707-0.707j \\ 1 & -1 \\ 1 & -0.707+0.707j \\ 1 & j \\ 1 & 0.707+0.707j \end{bmatrix}$$

La matrice $\tilde{A}$ s'exprime alors sous la forme suivante :

$$\tilde{A} = \frac{1}{\sqrt{8}} \begin{bmatrix} \tilde{B}_{1diag} \tilde{F}' & \tilde{B}_{2diag} \tilde{F}' & \tilde{B}_{3diag} \tilde{F}' & \tilde{B}_{4diag} \tilde{F}' \end{bmatrix}$$

soit

$$\tilde{\mathbf{A}} = \frac{1}{\sqrt{8}}\begin{bmatrix} 1 & 1 & 1 & 1 \\ 1 & e^{-j\frac{3\pi}{4}} & -1 & e^{j\frac{\pi}{4}} \\ 1 & j & 1 & j \\ 1 & e^{-j\frac{\pi}{4}} & -1 & e^{j\frac{3\pi}{4}} \\ 1 & -1 & 1 & -1 \\ 1 & e^{j\frac{\pi}{4}} & -1 & e^{-j\frac{3\pi}{4}} \\ 1 & -j & 1 & -j \\ 1 & e^{j\frac{3\pi}{4}} & -1 & e^{-j\frac{\pi}{4}} \end{bmatrix}$$

La figure 8 donne des résultats de simulation qui permettent de comparer les performances respectives de la technique connue de Barhumi et d'un procédé selon l'invention. Les simulations se rapportent à un système MIMO OFDM en considérant un canal BRAN E sélectif en temps et en fréquence et adapté à un contexte MIMO type environnement extérieur et dont les caractéristiques sont rassemblées dans le tableau 2 en Annexe A. La trame prise en compte est celle décrite dans l'article de Barhumi ; l'ensemble des porteuses modulées est divisé en deux sous-ensembles disjoints : un ensemble des porteuses pilotes et un ensemble des données utiles. La séquence d'apprentissage de base est une impulsion temporelle. La même puissance des symboles pilotes émis est imposée pour les deux méthodes comparées. La figure donne le tracé du taux d'erreur binaire (TEB ou BER selon la terminologie anglo-saxonne) en fonction du rapport Eb/No dans le cas d'une modulation QPSK avec un décalage Δt égal à 128. L'estimation des canaux effectuée aux fréquences pilotes est complétée par une interpolation linéaire en temps pour estimer l'ensemble des coefficients pour les différentes fréquences modulées. La courbe 1, c1, correspond à une estimation parfaite, la courbe 2, c2, correspond à une estimation selon Barhumi avec une itération et la courbe 3, c3, à une estimation selon Barhumi avec 5 itérations, la courbe 4, c4, correspond à une estimation selon l'invention avec K=2 et une itération et la courbe 5, c5, à une estimation selon l'invention avec K=2 et 5 itérations. Les itérations correspondent aux différentes itérations de l'annuleur d'interférence pendant la phase d'égalisation. La comparaison des courbes permet de constater que le procédé selon l'invention présente avantageusement un taux d'erreur binaire inférieur à celui de la méthode de Barhumi pour un même rapport signal à bruit.

Annexe A

Tableau 1

| 0 | P |
|---|---|
| 1 | P |
| 2 | P |
| 3 | P |
| 4 | P |
| 5 | P |
| 6 | p |
| 7 | P |

Tableau 2

| Nt | 2 |
|----|---|
| Nr | 2 |

EP 2 087 675 B1

(suite)

| | |
|---|---|
| Fréquence porteuse | 5200 MHz |
| Fréquence d'échantillonnage | 50 MHz |
| Espacement entre porteuse | 48.828125 kHz |
| Ratio du Préfixe Cyclique | 0.211 |
| Temps d'un symbole OFDM | 24.8 $\mu$s |
| Longueur du code convolutif | 7 |
| Rendement du code | 1/2 |
| Algorithme de décodage de canal | SOVA |
| Taille de FFT | 1024 |
| Porteuses modulées | 1024 |
| Code Espace-Temps | Multiplexage spatial |

**Revendications**

1. Procédé (1) d'émission adapté pour un système à Nt antennes d'émission et Nr antennes de réception, où Nt et Nr sont supérieurs ou égaux à 1, une antenne d'émission étant séparée d'une antenne de réception par un sous canal de transmission, mis en oeuvre par Nt dispositifs d'émission multi porteuses comprenant chacun un module de multiplexage et de modulation par $N_{FFT}$ fonctions orthogonales ($MX_1$, ..., $MX_{Nt}$) formant des symboles orthogonaux destinés à être transmis par les Nt antennes d'émission $TX_1$, ..., $TX_{Nt}$, comprenant les étapes qui consistent :

   - à déterminer (2) une séquence d'apprentissage de base ($\tilde{c}(p)$) déterminée par le positionnement de Np-symboles pilotes dans une trame temps fréquence,

   - à déterminer (3) $Kn = \left( \sum_{i=1}^{Nt} K_i \right)$ répliques de la séquence d'apprentissage de base ($\tilde{c}(p)$) telles qu'au moins une réplique soit décalée temporellement de la séquence de base, avec $K_i \geq 1$ et au moins un $K_i \geq 2$, sous contraintes que l'écart temporel extrême entre répliques soit inférieur au nombre Np de porteuses pilotes et que le décalage temporel minimal entre répliques de deux séquences d'apprentissage soit supérieur ou égal à l'étalement maximal des retards des sous canaux,
   - à déterminer (4) par antenne d'émission $TX_i$ une séquence d'apprentissage comme étant la somme des $K_i$ répliques.

2. Procédé (1) d'émission de symboles selon la revendication 1 dans lequel un intervalle de garde est ajouté avant toute émission d'un symbole orthogonal et dans lequel la contrainte sur la valeur minimale du décalage temporel est respectée en choisissant un décalage temporel minimal égal à la valeur de l'intervalle de garde.

3. Procédé (1) d'émission de symboles selon la revendication 1 dans lequel chaque séquence d'apprentissage est constituée de K répliques de la séquence d'apprentissage de base ($\tilde{c}(p)$).

4. Procédé (1) d'émission de symboles selon la revendication 1 dans lequel les répliques sont déterminées dans le domaine fréquentiel et dans lequel le décalage temporel est déterminé par une valeur de déphasage.

5. Procédé (10) d'estimation des sous canaux de transmission dans un système (SY) multi-antennes mettant en oeuvre Nt antennes d'émission ($TX_1$, ..., $TX_{Nt}$), où Nt est supérieur ou égal à 1, au moins une antenne de réception ($RX_1$, ..., $RX_{Nr}$) et une trame temps fréquence par antenne d'émission comprenant Np symboles pilotes (sp) formant une séquence d'apprentissage et des symboles de données (sd) d'un signal utile, chacune des Nt séquences d'apprentissage est la somme de Ki répliques décalées temporellement ou pas d'une séquence d'apprentissage de base ($\tilde{c}(p)$), telles que les valeurs Ki sont supérieures ou égales à un et au moins une valeur Ki est supérieure

ou égale à deux, est connue du récepteur (RE) et permet à ce dernier d'estimer une réponse impulsionnelle correspondant au canal de transmission séparant une antenne d'émission (TX$_1$, ..., TX$_{Nt}$) d'une antenne de réception RX$_j$ considérées RX$_j$, les symboles de données et les symboles pilotes étant modulés en fréquence par un module de multiplexage et de modulation par N$_{FFT}$ fonctions orthogonales (MX$_1$, ..., MX$_{Nt}$) pour former des symboles orthogonaux qui sont émis par les antennes d'émission sous la forme d'un signal multi porteuses à N$_{FFT}$ porteuses, comprenant :

> - une étape (11) de calcul d'une matrice A construite sous forme de blocs à partir des séquences d'apprentissage et de la matrice de Fourier de dimensions N$_{FFT}$x N$_{FFT}$, dont le nombre de blocs est égal au produit du nombre de symboles orthogonaux de la séquence d'apprentissage de base par la somme des K$_i$, un bloc étant déterminé par le produit d'une part d'une matrice diagonale formée des symboles pilotes contenus dans un symbole orthogonal de la séquence d'apprentissage associée au bloc et d'autre part de la matrice de Fourier et comprenant,
> pour une antenne de réception considérée (RX$_j$),
> - une étape (12) de calcul de K$_i$ estimées d'au moins une parmi les Nt réponses impulsionnelles dans le domaine temporel en multipliant Np symboles pilotes, extraits d'un signal fréquentiel (R$_j$(n)) obtenu après démodulation d'un signal temporel reçu par l'antenne de réception considérée (RX$_j$) au moyen d'une transformée de Fourier de taille N$_{FFT}$, avec le pseudo inverse de la matrice A,
> - une étape (13) de calcul d'une moyenne sur les K$_i$ estimées de la réponse impulsionnelle considérée.

6. Procédé (10) d'estimation des canaux de transmission selon la revendication 5 dans lequel le calcul des Nt réponses impulsionnelles est étendu aux porteuses modulées par des données, au moyen d'une interpolation.

7. Module d'émission comprenant un module de multiplexage et de modulation par N$_{FFT}$ fonctions orthogonales (MX$_1$, ..., MX$_{Nt}$), adapté à un système (SY) multi- antennes mettant en oeuvre Nt antennes d'émission TX$_1$, ..., TX$_{Nt}$, Nr antennes de réception, où Nt et Nr sont supérieurs ou égaux à 1, et une trame temps fréquence par antenne d'émission comprenant des symboles pilotes (sp) et des symboles de données (sd) d'un signal utile, les symboles de données et les symboles pilotes étant modulés en fréquence par le module de multiplexage et de modulation (MX$_1$, ..., MX$_{Nt}$) pour former des symboles orthogonaux qui sont émis par une antenne d'émission sous la forme d'un signal multi porteuses à N$_{FFT}$ porteuses avec Np porteuses pilotes , comprenant :

> - un module de détermination d'une séquence d'apprentissage de base ($\tilde{c}(p)$) déterminée par le positionnement de Np symboles pilotes dans la trame temps fréquence associée à une antenne d'émission déterminée (TX$_1$),

> - un module de détermination de Kn, $Kn = \left( \sum_{i=1}^{Nt} K_i \right)$, répliques de la séquence d'apprentissage de base ($\tilde{c}$

> (p)) telles qu'au moins une réplique soit décalée temporellement de la séquence de base, avec $K_i \geq 1$ et au moins un $K_i \geq 2$, sous contraintes que l'écart temporel extrême entre répliques soit inférieur au nombre Np de porteuses pilotes et que le décalage temporel minimal entre répliques de deux séquences d'apprentissage soit supérieur ou égal à l'étalement maximal des retards des sous canaux reliant une antenne d'émission à une antenne de réception et
> - un module de détermination d'une séquence d'apprentissage par antenne d'émission TXi comme étant la somme de K$_i$ répliques.

8. Emetteur (RE) pour un système (SY) multi-antennes **caractérisé en ce qu'**il comprend au moins un module d'émission (ME) selon la revendication précédente.

9. Module d'estimation (EsT) des canaux de transmission dans un système (SY) multi- antennes mettant en oeuvre Nt antennes d'émission (TX$_1$, ..., TX$_{Nt}$), où Nt est supérieur ou égale à 1, au moins une antenne de réception (RX$_1$, ..., RX$_{Nr}$) et une trame temps fréquence par antenne d'émission comprenant des symboles pilotes (sp) formant une séquence d'apprentissage et des symboles de données (sd) d'un signal utile, les Nt séquences d'apprentissage sont connues du récepteur (RE) et permettent à ce dernier d'estimer Nt réponses impulsionnelles correspondant aux Nt canaux de transmission séparant respectivement une des antennes d'émission (TX$_1$, ..., TX$_{Nt}$) de l'antenne de réception considérée RX$_j$, les symboles de données et les symboles pilotes étant modulés en fréquence par un module de multiplexage et de modulation par $N_{FFT}$ fonctions orthogonales ($MX_1$, ..., $MX_{Nt}$) pour former des symboles orthogonaux qui sont émis par les antennes d'émission sous la forme d'un signal multi porteuses à $N_{FFT}$ porteuses avec $N_p$ porteuses pilotes, **caractérisé en ce qu**'il comprend :

- des moyens pour calculer une matrice A construite sous forme de blocs à partir des séquences d'apprentissage et de la matrice de Fourier de dimensions $N_{FFT}$ x $N_{FFT}$ dont le nombre de blocs est égal au produit du nombre de symboles orthogonaux de la séquence d'apprentissage de base par la somme des $K_i$, un bloc étant déterminé par le produit d'une part d'une matrice diagonale formée des symboles pilotes contenus dans un symbole orthogonal de la séquence d'apprentissage associée au bloc et d'autre part de la matrice de Fourier et **en ce qu**'il comprend,

pour une antenne de réception considérée $RX_j$,

- des moyens pour calculer $K_i$ estimées d'au moins une parmi les Nt réponses impulsionnelles dans le domaine temporel en multipliant Np symboles pilotes extraits d'un signal fréquentiel ($R_j(n)$) obtenu après démodulation d'un signal temporel reçu par l'antenne de réception considérée $RX_j$ au moyen d'une FFT de taille $N_{FFT}$, avec le pseudo inverse de la matrice A et

- un moyen de calcul de moyenne sur les $K_i$ estimées de la réponse impulsionnelle considérée.

**10.** Récepteur (RE) pour un système (SY) multi-antennes **caractérisé en ce qu'**il comprend au moins un module d'estimation (EsT) des canaux de transmission selon la revendication précédente.

**11.** Système (SY) multi-antennes **caractérisé en ce qu'**il comprend au moins un récepteur (RE) selon la revendication précédente.

**12.** Programme d'ordinateur sur un support d'informations, ledit programme comportant des instructions de programme adaptées à la mise en oeuvre d'un procédé (1) d'émission selon l'une quelconque des revendications 1 à 4, lorsque ledit programme est chargé et exécuté dans un émetteur (EM).

**13.** Support d'informations comportant des instructions de programme adaptées à la mise en oeuvre d'un procédé (1) d'émission, selon l'une quelconque des revendications 1 à 4, lorsque ledit programme est chargé et exécuté dans un émetteur (EM):

**14.** Programme d'ordinateur sur un support d'informations, ledit programme comportant des instructions de programme adaptées à la mise en oeuvre d'un procédé (10) d'estimation de canaux selon l'une quelconque des revendications 5 et 6, lorsque ledit programme est chargé et exécuté dans un récepteur (RE).

**15.** Support d'informations comportant des instructions de programme adaptées à la mise en oeuvre d'un procédé (10) d'estimation de canaux, selon l'une quelconque des revendications 5 et 6, lorsque ledit programme est chargé et exécuté dans un récepteur (RE).

**Patentansprüche**

**1.** Sendeverfahren (1), das für ein System mit Nt Sendeantennen und Nr Empfangsantennen ausgelegt ist, wobei Nt und Nr größer oder gleich 1 sind, wobei eine Sendeantenne von einer Empfangsantenne durch einen Übertragungsunterkanal getrennt ist, das durch Nt Mehrträger- Sendevorrichtungen mit jeweils einem Multiplexierungs- und Modulationsmodul mit $N_{FFT}$ orthogonalen Funktionen ($MX_1$, ..., $MX_{Nt}$) ausgeführt wird, die orthogonale Symbole bilden, die durch die Nt Sendeantennen $TX_1$, ..., $TX_{Nt}$ übertragen werden sollen, mit den Schritten, die aus Folgenden bestehen:

- Bestimmen (2) einer Basislernsequenz ($\tilde{c}(p)$), die durch die Positionierung von Np Pilotsymbolen in einem Zeit- Frequenz- Rahmen bestimmt ist,

- Bestimmen (3) von $Kn = \left(\sum_{i=1}^{Nt} K_i\right)$ Kopien der Basislernsequenz ($\tilde{c}(p)$), so dass mindestens eine Kopie von der Basissequenz zeitlich versetzt ist, wobei $K_i \geq 1$ und mindestens ein $K_i \geq 2$, unter den Einschränkungen, dass der äußerste zeitliche Abstand zwischen Kopien geringer ist als die Anzahl Np von Pilotträgern und dass der minimale zeitliche Versatz zwischen Kopien von zwei Lernsequenzen größer oder gleich die maximale Spreizung der Verzögerungen der Unterkanäle ist,
- Bestimmen (4) einer Lernsequenz als Summe der $K_i$ Kopien pro Sendeantenne $TX_i$.

**2.** Verfahren (1) zum Senden von Symbolen nach Anspruch 1, in dem ein Schutzintervall vor jeder Sendung eines orthogonalen Symbols hinzugefügt wird und in dem die Einschränkung für den minimalen Wert des zeitlichen Versatzes durch Wählen eines minimalen zeitlichen Versatzes gleich dem Wert des Schutzintervalls eingehalten wird.

**3.** Verfahren (1) zum Senden von Symbolen nach Anspruch 1, in dem jede Lernsequenz aus K Kopien der Basislernsequenz ($\tilde{c}(p)$) gebildet wird.

**4.** Verfahren (1) zum Senden von Symbolen nach Anspruch 1, in dem die Kopien im Frequenzbereich bestimmt werden und in dem der zeitliche Versatz durch einen Phasenverschiebungswert bestimmt wird.

**5.** Verfahren (10) zum Abschätzen der Übertragungsunterkanäle in einem Mehrantennensystem (SY), das Nt Sendeantennen ($TX_1$, ..., $TX_{Nt}$), wobei Nt größer oder gleich 1 ist, mindestens eine Empfangsantenne ($RX_1$, ..., $RX_{Nr}$) und einen Zeit- Frequenz- Rahmen pro Sendeantenne mit Np Pilotsymbolen (sp), die eine Lernsequenz bilden, und Datensymbolen (sd) eines Nutzsignals einsetzt, wobei jede der Nt Lernsequenzen die Summe von Ki zeitlich versetzten oder nicht versetzten Kopien einer Basislernsequenz ($\tilde{c}(p)$) ist, so dass die Werte $K_i$ größer oder gleich eins sind und mindestens ein Wert $K_i$ größer oder gleich zwei ist, die dem Empfänger (RE) bekannt ist und diesem letzteren ermöglicht, eine Impulsantwort abzuschätzen, die dem Übertragungskanal entspricht, der eine Sendeantenne ($TX_1$, ..., $TX_{Nt}$) von einer betrachteten Empfangsantenne $RX_j$ trennt, wobei die Datensymbole und die Pilotsymbole durch ein Multiplexierungs- und Modulationsmodul durch $N_{FFT}$ orthogonale Funktionen ($MX_1$, ..., $MX_{Nt}$) frequenzmoduliert werden, um orthogonale Symbole zu bilden, die durch die Sendeantennen in Form eines Mehrträgersignals mit $N_{FFT}$ Trägern gesendet werden, umfassend:

- einen Schritt (11) zum Berechnen einer Matrix A, die in Form von Blöcken aus Lernsequenzen konstruiert ist, und der Fourier- Matrix mit den Dimensionen $N_{FFT}$ x $N_{FFT}$, deren Anzahl von Blöcken gleich dem Produkt der Anzahl von orthogonalen Symbolen der Basislernsequenz mit der Summe der $K_i$ ist, wobei ein Block durch das Produkt einerseits einer diagonalen Matrix, die aus den Pilotsymbolen gebildet ist, die in einem orthogonalen Symbol der Lernfrequenz enthalten sind, die dem Block zugeordnet ist, und andererseits der Fourier- Matrix bestimmt ist, und umfassend
für eine betrachtete Empfangsantenne ($RX_j$)
- einen Schritt (12) zum Berechnen von $K_i$ Abschätzungen von mindestens einer von den Nt Impulsantworten im Zeitbereich durch Multiplizieren von Np Pilotsymbolen, die aus einem Frequenzsignal ($R_j(n)$) gewonnen werden, das nach Demodulation eines Zeitsignals erhalten wird, das von der betrachteten Empfangsantenne ($RX_j$) empfangen wird, mittels einer Fourier-Transformierten mit der Größe $N_{FFT}$, mit der Pseudoinversen der Matrix A,
- einen Schritt (13) zum Berechnen eines Mittelwerts über die $K_i$ Abschätzungen der betrachteten Impulsantwort.

**6.** Verfahren (10) zum Abschätzen der Übertragungskanäle nach Anspruch 5, in dem die Berechnung der Nt Impulsantworten auf die durch Daten modulierten Träger mittels einer Interpolation erweitert wird.

**7.** Sendemodul mit einem Multiplexierungs- und Modulationsmodul mit $N_{FFT}$ orthogonalen Funktionen ($MX_1$, ..., $MX_{Nt}$), das an ein Mehrantennensystem (SY) angepasst ist, das Nt Sendeantennen $TX_1$, ..., $TX_{Nt}$, Nr Empfangsantennen, wobei Nt und Nr größer oder gleich 1 sind, und einen Zeit- Frequenz- Rahmen pro Sendeantenne mit Pilotsymbolen (sp) und Datensymbolen (sd) eines Nutzsignals einsetzt, wobei die Datensymbole und die Pilotsymbole durch das Multiplexierungs- und Modulationsmodul ($MX_1$, ..., $MX_{Nt}$) frequenzmoduliert werden, um orthogonale Symbole zu bilden, die durch eine Sendeantenne in Form eines Mehrträgersignals mit $N_{FFT}$ Trägern mit Np Pilotträgern gesendet werden, umfassend:

- ein Modul zur Bestimmung einer Basislernsequenz ($\tilde{c}(p)$), die durch die Positionierung von Np Pilotsymbolen im Zeit- Frequenz- Rahmen, der einer bestimmten Sendeantenne ($TX_1$) zugeordnet ist, bestimmt ist,

- ein Modul zur Bestimmung von Kn, $Kn = \left( \sum_{i=1}^{Nt} K_i \right)$, Kopien der Basislernsequenz ($\tilde{c}(p)$), so dass mindestens eine Kopie von der Basissequenz zeitlich versetzt ist, wobei $K_i \geq 1$ und mindestens ein $K_i \geq 2$, unter

den Einschränkungen, dass der äußerste zeitliche Abstand zwischen Kopien geringer ist als die Anzahl Np von Pilotträgern und dass der minimale zeitliche Versatz zwischen Kopien von zwei Lernsequenzen größer oder gleich die maximale Spreizung der Verzögerungen der Unterkanäle ist, die eine Sendeantenne mit einer Empfangsantenne verbinden, und

- ein Modul zum Bestimmen einer Lernsequenz pro Sendeantenne TXi als Summe von $K_i$ Kopien.

8. Sender (RE) für ein Mehrantennensystem (SY), **dadurch gekennzeichnet, dass** er mindestens ein Sendemodul (ME) nach dem vorangehenden Anspruch umfasst.

9. Modul (EsT) zum Abschätzen der Übertragungskanäle in einem Mehrantennensystem (SY), das Nt Sendeantennen ($TX_1$, ..., $TX_{Nt}$), wobei Nt größer oder gleich 1 ist, mindestens eine Empfangsantenne ($RX_1$, ..., $RX_{Nr}$) und einen Zeit- Frequenz- Rahmen pro Sendeantenne mit Pilotsymbolen (sp), die eine Lernsequenz bilden, und Datensymbolen (sd) eines Nutzsignals einsetzt, wobei die Nt Lernsequenzen dem Empfänger (RE) bekannt sind und diesem letzteren ermöglichen, Nt Impulsantworten abzuschätzen, die den Nt Übertragungskanälen entsprechen, die jeweils eine der Sendeantennen ($TX_1$, ..., $TX_{Nt}$) von der betrachteten Empfangsantenne $RX_j$ trennen, wobei die Datensymbole und die Pilotsymbole durch ein Multiplexierungs- und Modulationsmodul durch $N_{FFT}$ orthogonale Funktionen ($MX_1$, ..., $MX_{Nt}$) frequenzmoduliert werden, um orthogonale Symbole zu bilden, die von den Sendeantennen in Form eines Mehrträgersignals mit $N_{FFT}$ Trägern mit $N_p$ Pilotträgern gesendet werden, **dadurch gekennzeichnet, dass** es Folgendes umfasst:

- Mittel zum Berechnen einer Matrix A, die in Form von Blöcken aus Lernsequenzen konstruiert ist, und der Fourier- Matrix mit den Dimensionen $N_{FFT}$ x $N_{FFT}$, deren Anzahl von Blöcken gleich dem Produkt der Anzahl von orthogonalen Symbolen der Basislernsequenz mit der Summe der $K_i$ ist, wobei ein Block durch das Produkt einerseits einer diagonalen Matrix, die aus Pilotsymbolen gebildet ist, die in einem orthogonalen Symbol der Lernsequenz enthalten sind, die dem Block zugeordnet ist, und andererseits der Fourier- Matrix bestimmt ist, und dass es umfasst
für eine betrachtete Empfangsantenne $RX_j$
- Mittel zum Berechnen von $K_i$ Abschätzungen von mindestens einer von den Nt Impulsantworten im Zeitbereich durch Multiplizieren von Np Pilotsymbolen, die aus einem Frequenzsignal ($R_j(n)$) gewonnen werden, das nach der Demodulation eines Zeitsignals erhalten wird, das von der betrachteten Empfangsantenne $RX_j$ empfangen wird, mittels einer FFT mit der Größe $N_{FFT}$, mit der Pseudoinversen der Matrix A, und
- ein Mittel zum Berechnen des Mittelwerts über die $K_i$ Abschätzungen der betrachteten Impulsantwort.

10. Empfänger (RE) für ein Mehrantennensystem (SY), **dadurch gekennzeichnet, dass** er mindestens ein Modul (EsT) zum Abschätzen der Übertragungskanäle nach dem vorangehenden Anspruch umfasst.

11. Mehrantennensystem (SY), **dadurch gekennzeichnet, dass** es mindestens einen Empfänger (RE) nach dem vorangehenden Anspruch umfasst.

12. Computerprogramm auf einem Informationsträger, wobei das Programm Programmbefehle umfasst, die für die Ausführung eines Sendeverfahrens (1) nach einem der Ansprüche 1 bis 4 ausgelegt sind, wenn das Programm in einen Sender (EM) geladen und in diesem ausgeführt wird.

13. Informationsträger mit Programmbefehlen, die für die Ausführung eines Sendeverfahrens (1) nach einem der Ansprüche 1 bis 4 ausgelegt sind, wenn das Programm in einen Sender (EM) geladen und in diesem ausgeführt wird.

14. Computerprogramm auf einem Informationsträger, wobei das Programm Programmbefehle umfasst, die für die Ausführung eines Verfahrens (10) zum Abschätzen von Kanälen nach einem der Ansprüche 5 und 6 ausgelegt sind, wenn das Programm in einen Empfänger (RE) geladen und in diesem ausgeführt wird.

15. Informationsträger mit Programmbefehlen, die für die Ausführung eines Verfahrens (10) zum Abschätzen von Kanälen nach einem der Ansprüche 5 und 6 ausgelegt sind, wenn das Programm in einen Empfänger (RE) geladen und in diesem ausgeführt wird.

**Claims**

1. Transmission method (1) suitable for a system with Nt transmit antennas and Nr receive antennas, where Nt and Nr are greater than or equal to 1, a transmit antenna being separated from a receive antenna by a transmission sub- channel, implemented by Nt multi- carrier transmission devices each comprising a module for multiplexing and modulating by $N_{FFT}$ orthogonal functions ($MX_1$, ..., $MX_{Nt}$) forming orthogonal symbols to be transmitted by the Nt transmit antennas ($TX_1$, ..., $TX_{Nt}$), comprising the steps which consist:

- in determining (2) a basic training sequence ($\tilde{c}(p)$) from the position of Np pilot symbols in a time- frequency frame,

- in determining (3) $Kn = \left( \sum\limits_{i=1}^{Nt} K_i \right)$ replicas of the basic training sequence ($\tilde{c}(p)$) such that at least one replica is time-offset from the basic sequence, with $K_i \geq 1$ and at least one $K_i \geq 2$, under the constraints that the extreme time difference between replicas be lower than the number Np of pilot carriers and that the minimum time offset between replicas of two training sequences be greater than or equal to the maximum spread of the delays in the sub-channels,
- in determining (4) per transmit antenna ($TX_i$) a training sequence as being the sum of the $K_i$ replicas.

2. Transmission method (1) according to Claim 1, in which a guard interval is added before any transmission of an orthogonal symbol and in which the constraint on the minimum value of the time offset is complied with by choosing a minimum time offset equal to the value of the guard interval.

3. Transmission method (1) according to Claim 1, in which each training sequence is composed of K replicas of the basic training sequence ($\tilde{c}(p)$).

4. Transmission method (1) according to Claim 1, in which the replicas are determined in the frequency domain and in which the time offset is determined by a phase offset value.

5. Method (10) for estimating the transmission sub- channels in a multi- antenna system (SY) implementing Nt transmit antennas ($TX_1$, ..., $TX_{Nt}$), where Nt is greater than or equal to 1, at least one receive antenna ($RX_1$, ..., $RX_{Nr}$), and a time- frequency frame per transmit antenna comprising Np pilot symbols (sp) forming a training sequence and data symbols (sd) of a payload signal, each of the Nt training sequences being the sum of $K_i$ replicas of a basic training sequence ($\tilde{c}(p)$), either time- offset or not, such that the values $K_i$ are greater than or equal to one and at least one value $K_i$ is greater than or equal to two, being known to the receiver (RE) and enabling the latter to estimate an impulse response corresponding to the transmission channel separating a transmit antenna ($TX_1$, ..., $TX_{Nt}$) from a receive antenna ($RX_j$) concerned, the data symbols and the pilot symbols being frequency- modulated by a multiplexing and modulation module using $N_{FFT}$ orthogonal functions ($MX_1$, ..., $MX_{Nt}$) to form orthogonal symbols which are transmitted by the transmit antennas in the form of a multi- carrier signal using $N_{FFT}$ carriers, comprising:

- a step (11) of calculation of a matrix A constructed in the form of blocks based on the training sequences and the Fourier matrix of dimensions $N_{FFT} \times N_{FFT}$, in which the number of blocks is equal to the product of the number of orthogonal symbols of the basic training sequence by the sum of the values $K_i$, a block being determined by the product firstly of a diagonal matrix formed of the pilot symbols contained in an orthogonal symbol of the training sequence associated with the block, and secondly of the Fourier matrix and comprising, for a receive antenna concerned ($RX_j$),
- a step (12) of computing $K_i$ estimates of at least one of the Nt impulse responses in the time domain by multiplying Np pilot symbols, extracted from a frequency-domain signal ($R_j(n)$) obtained after demodulation of a time-domain signal received by the receive antenna concerned ($RX_j$) by means of a Fourier transform of size $N_{FFT}$, with the pseudo-inverse of the matrix A,
- a step (13) of computing an average over the $K_i$ estimates of the impulse response concerned.

6. Method (10) for estimating the transmission channels according to Claim 5, in which the computation of the Nt impulse responses is extended to the carriers modulated by data, by means of an interpolation.

7. Transmission module comprising a multiplexing and modulation module using $N_{FFT}$ orthogonal functions ($MX_1$, ..., $MX_{Nt}$), suitable for a multi- antenna system (SY) using Nt transmit antennas ($TX_1$, ..., $TX_{Nt}$), Nr receive antennas, where Nt and Nr are greater than or equal to 1, and a time- frequency frame per transmit antenna comprising pilot symbols (sp) and data symbols (sd) of a useful signal, the data symbols and the pilot symbols being frequency-modulated by the multiplexing and modulation module ($MX_1$, ..., $MX_{Nt}$) to form orthogonal symbols which are transmitted by a transmit antenna in the form of a multi- carrier signal using $N_{FFT}$ carriers and Np pilot carriers, comprising:

- a module for determining a basic training sequence ($c^\sim(p)$) from the position of Np pilot symbols in the time-frequency frame associated with a determined transmit antenna ($TX_1$),

- a module for determining Kn, $Kn = \left( \sum_{i=1}^{Nt} K_i \right)$, replicas of the basic training sequence ($c^\sim(p)$) which are such that at least one replica is time-offset from the basic sequence, with $K_i \geq 1$ and at least one $K_i \geq 2$, under the constraints that the extreme time difference between replicas be less than the number Np of pilot carriers and that the minimum time offset between replicas of two training sequences be greater than or equal to the maximum spread of the delays in the sub-channels connecting a transmit antenna to a receive antenna, and
- a module for determining a training sequence per transmit antenna ($TX_i$) as being the sum of $K_i$ replicas.

8. Transmitter (RE) for a multi-antenna system (SY), **characterized in that** it comprises at least one transmission module (ME) according to the preceding claim.

9. Module for estimating (EsT) the transmission channels in a multi- antenna system (SY) implementing Nt transmit antennas ($TX_1$, ..., $TX_{Nt}$), where Nt is greater than or equal to 1, at least one receive antenna ($RX_1$, ..., $RX_{Nr}$) and a time- frequency frame per transmit antenna comprising pilot symbols (sp) forming a training sequence and data symbols (sd) of a useful signal, the Nt training sequences being known to the receiver (RE) and enabling the latter to estimate Nt impulse responses corresponding to the Nt transmission channels separating respectively one of the transmit antennas ($TX_1$, ..., $TX_{Nt}$) from the receive antenna concerned ($Rx_j$), the data symbols and the pilot symbols being frequency- modulated by a multiplexing and modulation module using $N_{FFT}$ orthogonal functions ($MX_1$, ..., $MX_{Nt}$) to form orthogonal symbols which are transmitted by the transmit antennas in the form of a multi- carrier signal using $N_{FFT}$ carriers with Np pilot carriers, **characterized in that** it comprises:

- means for computing a matrix A constructed in the form of blocks based on the training sequences and the Fourier matrix of dimensions $N_{FFT}$ x $N_{FFT}$, in which the number of blocks is equal to the product of the number of orthogonal symbols of the basic training sequence by the sum of the values $K_i$, a block being determined by the product firstly of a diagonal matrix formed by the pilot symbols contained in an orthogonal symbol from the training sequence associated with the block, and secondly of the Fourier matrix and **in that** it comprises, for a receive antenna concerned ($RX_j$),
- means for computing $K_i$ estimates of at least one of the Nt impulse responses in the time domain by multiplying Np pilot symbols extracted from a frequency-domain signal ($R_j(n)$) obtained after demodulation of a time-domain signal received by the receive antenna concerned ($RX_j$) by means of an FFT of size $N_{FFT}$, with the pseudo-inverse of the matrix A, and
- means for computing an average of the $K_i$ estimates of the impulse response concerned.

10. Receiver (RE) for a multi-antenna system (SY), **characterized in that** it comprises at least one module for estimating (EsT) the transmission channels according to the preceding claim.

11. Multi-antenna system (SY), **characterized in that** it comprises at least one receiver (RE) according to the preceding claim.

12. Computer program on an information storage medium, said program having program instructions suitable for the implementation of a transmission method (1) according to any one of Claims 1 to 4 when said program is loaded and executed in a transmitter (EM).

13. Information storage medium having program instructions suitable for the implementation of a transmission method (1) according to any one of Claims 1 to 4 when said program is loaded and executed in a transmitter (EM).

14. Computer program on an information storage medium, said program having program instructions suitable for the implementation of a method (10) for estimating channels according to any one of Claims 5 and 6 when said program is loaded and executed in a receiver (RE).

15. Information storage medium having program instructions suitable for the implementation of a method (10) for estimating channels according to any one of Claims 5 and 6 when said program is loaded and executed in a receiver (RE).

Fig. 1

Fig. 2

Fig. 3

Fig. 4

Détermination de :
$\tilde{c}\,(p)$

1

2

Déterminationi sous

contraintes de : $Kn = \left(\sum\limits_{i=I}^{Nt} K_i\right)$

répliques de $\tilde{c}\,(p)$

3

**Fig. 5**

Détermination des Nt
séquences d'apprentissage

4

$10$

$11$

$$A= \begin{bmatrix} B_{1\,diag}(0)\,F' & ----- & B_{Kn\,diag}(0)\,F' \\ \vdots & & \vdots \\ B_{1\,diag}(g-1)\,F' & ----- & B_{Kn\,diag}(g-1)\,F' \end{bmatrix}$$

$RX_j$

FFT

$R_j(n)$

**Fig. 6**

12

$\overset{\wedge}{h}_j = (\tilde{A}^H \tilde{A})^+ \tilde{A}^H \tilde{R}_j$

13

Moyenne des $K_i$
estimées de $\overset{\wedge}{h}_{j,i}$

**Fig. 7**

**Fig. 8**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **M.-S.BAEK ; H.-J. KOOK ; M.-J. KIM ; Y.-H. YOU ; H-S. SONG.** Multi-Antenna Scheme for High Capacity Transmission in the Digital Audio Broadcasting. *IEEE Transactions on Broadcasting,* Décembre 2005, vol. 51 (4

- **I. BARHUMI ; G. LEUS ; M. MOONEN.** Optimal Training Design for MIMO OFDM Systems in Mobile Wireless Channels. *IEEE Transactions on Signal Processing,* Juin 2003, vol. 51 (6